# EUROPEAN PATENT SPECIFICATION

(11) **EP 4 398 515 B1**
(45) Date of publication and mention of the grant of the patent: **19.08.2026**
(21) Application number: 22875014.7
(22) Date of filing: 28.09.2022
(51) Int. Cl.: H04L 69/24, H04L 9/40, H04W 12/02, H04W 12/082

(54) **DATA CALL METHOD AND APPARATUS**
VERFAHREN UND VORRICHTUNG FÜR DATENANRUFE
PROCÉDÉ ET APPAREIL D'APPEL DE DONNÉES

(30) Priority: 30.09.2021 CN 202111166931
(43) Date of publication of application: 10.07.2024
(73) Proprietor: Huawei Technologies Co., Ltd., Shenzhen, Guangdong 518129 (CN)
(72) Inventor: HU, Li, Shenzhen, Guangdong 518129 (CN); WU, Rong, Shenzhen, Guangdong 518129 (CN)
(74) Representative: Goddar, Heinz J.
(86) International application number: PCT/CN2022/122227
(87) International publication number: WO 2023/051631

(56) References cited:
- CN-A- 111 566 991
- US-A1- 2010 095 011
- US-A1- 2010 095 011
- "3rd Generation Partnership Project; Technical Specification Group Services and System Aspects; Study on User Consent for 3GPP services (Release 17)", 31 August 2021 (2021-08-31), XP052063802, Retrieved from the Internet <URL:https://ftp.3gpp.org/tsg_sa/WG3_Security/TSGS3_104e/Docs/S3-213146.zip S3-213146 - TR 33.867 - v0.6.0 - rm.docx> [retrieved on 20210831]

## Description

### TECHNICAL FIELD

This application relates to the field of communication technologies, and in particular, to a data invocation method and an apparatus.

### BACKGROUND

Laws for protecting personal information such as the *Personal Information Protection Law* and the *General Data Protection Regulation, GDPR* impose requirements on how to protect personal information. For example, if an enterprise wants to process personal information, the enterprise needs to obtain user consent. If a user wants to revoke the user consent after authorizing the enterprise to process the personal information of the user, that is, revoke the authorization for the enterprise to continue processing the personal information, the enterprise should not further process the personal information.

However, some network devices that request data do not support revocation of user consent, and consequently, the right of revocation of the user may fail to be exercised. Therefore, legal risks exist. In view of this, it is desirable to have a technology to meet the requirement of the user for exercising the right of revocation in a network.

"3rd Generation Partnership Project; Technical Specification Group Services and System Aspects; Study on User Consent for 3GPP services (Release 17)", 3GPP DRAFT; S3-213146, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 31 August 2021 (2021-08-31), XP052063802, discloses a study on user consent for 3GPP services, focusing on identifying and evaluating requirements and solutions to support user consent while considering privacy considerations.

### SUMMARY

This application provides a data invocation method and an apparatus, to meet a requirement of a user for exercising a right of revocation on data use in a network. The invention is set out in the appended set of claims.

According to a first aspect, a data invocation method is provided, and includes: An authorization verification network element receives a data invocation request message from a service consumer network element, where the data invocation request message includes an identifier of a data owner, and the data invocation request message is used to request to invoke data of the data owner. The authorization verification network element determines whether the service consumer network element has a capability of supporting stopping data processing, where the capability indicates that the service consumer network element supports stopping processing data obtained from the authorization verification network element. In response to the service consumer network element does not have the capability, the authorization verification network element rejects the data invocation request message.

The supporting stopping processing data obtained from the authorization verification network element may indicate that the service consumer network element supports stopping, as indicated by the authorization verification network element, processing the data obtained from the authorization verification network element. In other words, the service consumer network element may identify indication information that is sent by the authorization verification network element and that is for notifying data processing, and support obtaining the data from the authorization verification network element based on the indication information.

According to the foregoing solution, the authorization verification network element determines, depending on whether the service consumer network element has the capability of supporting stopping data processing, whether the data invocation request of the service consumer network element can be executed. If the service consumer network element does not have the capability of supporting stopping data processing, the authorization verification network element rejects execution of the data invocation request of the service consumer network element. On a basis of this solution, after consenting to data invocation of the service consumer network element, a terminal device may exercise a right of revocation at any time. In other words, the terminal device may cancel the consent to data invocation of the service consumer network element at any time, to avoid risks of related laws and regulations.

With reference to the first aspect, in some implementations of the first aspect, that the authorization verification network element determines whether the service consumer network element has a capability of supporting stopping data processing includes: The authorization verification network element receives capability indication information from the service consumer network element. In response to the data invocation request message, the authorization verification network element determines, based on the capability indication information, whether the service consumer network element has the capability of supporting stopping data processing.

According to the foregoing solution, the authorization verification network element determines, based on the capability indication information of the service consumer network element, whether the consumer network element supports stopping data processing, to further determine, depending on whether the service consumer network element has the capability of supporting stopping data processing, whether the data invocation request of the service consumer network element can be executed.

With reference to the first aspect, in some implementations of the first aspect, that the authorization verification network element determines whether the service consumer network element has a capability of supporting stopping data processing includes: In response to that the authorization verification network element receives no capability indication information from the service consumer network element, or in response to that a context of the authorization verification network element stores no capability indication information of the service consumer network element, the authorization verification network element determines that the service consumer network element does not have the capability of supporting stopping data processing, where the capability indication information indicates whether the service consumer network element has the capability.

In an implementation, if the service consumer network element has the capability of supporting stopping data processing, the service consumer network element reports the capability indication information before sending the data invocation request message, where the capability indication information indicates that the service consumer network element has the capability of supporting stopping data processing. The authorization verification network element may determine, based on the capability indication information, that the service consumer network element supports stopping data processing. If the authorization verification network element receives no capability indication information, the authorization verification network element determines that the service consumer network element does not support stopping data processing.

In another implementation, the authorization verification network element sends a capability information query request message to the service consumer network element, where the capability information query request message is used to request to query whether the service consumer network element supports stopping data processing. If the service consumer network element supports stopping data processing, the service consumer network element reports the capability indication information to the authorization verification network element, where the capability indication information indicates that the service consumer network element supports stopping processing personal data. The authorization verification network element may determine, based on the capability indication information, that the service consumer supports stopping data processing. If, after sending the capability information query request message, the authorization verification network element does not receive, within specified time, the capability indication information reported by the service consumer network element, the authorization verification network element determines that the service consumer network element does not support stopping data processing.

According to the foregoing solution, the authorization verification network element may flexibly determine whether the service consumer network element supports stopping processing data of the terminal device, to determine, based on a determining result, whether the data invocation request of the service consumer network element can be executed.

With reference to the first aspect, in some implementations of the first aspect, the method further includes: The authorization verification network element sends a capability information query request message to the service consumer network element, where the capability information query request message is used to request to query whether the service consumer network element has the capability.

According to the foregoing solution, the authorization verification network element may determine, by using the capability information query request message, whether the service consumer network element has the capability of stopping data processing, to determine, depending on whether the service consumer network element has the capability, whether to process the data request of the service consumer network element.

With reference to the first aspect, in some implementations of the first aspect, that the authorization verification network element rejects the data invocation request message of the service consumer network element includes: The authorization verification network element sends a data invocation response message to the service consumer network element, where the data invocation response message is used to reject the data invocation request message, the data invocation response message includes a cause value, and the cause value indicates a cause for rejecting the data invocation request message. In an example, the cause value indicates that the rejection cause is that the service consumer network element does not support the capability.

According to the foregoing solution, in response to that the service consumer network element does not have the capability of supporting stopping data processing, the authorization verification network element sends, to the service consumer network element, a response message used to reject data invocation, and indicates the rejection cause to the service consumer network element by using the cause value. In this way, the service consumer network element may determine the rejection cause, so that data invocation is no longer initiated, thereby saving resources.

With reference to the first aspect, in some implementations of the first aspect, the method further includes: The authorization verification network element determines that the data owner allows the service consumer network element to use the data of the data owner.

According to the foregoing solution, in response to determining that the data owner allows the service consumer network element to use the data of the data owner, the data verification network element may then verify whether the service consumer network element has the capability of supporting stopping data processing. Only when the data owner allows the service consumer network element to use the data of the data owner, and when the service consumer network element has the capability of supporting stopping data processing, the data verification network element executes the data invocation request of the service consumer network element, to ensure that user consent is granted to the data invocation request of the service consumer network element, and a user can exercise a right of revocation.

With reference to the first aspect, in some implementations of the first aspect, that the authorization verification network element determines that the data owner allows the service consumer network element to use the data of the data owner includes: The authorization verification network element sends an intention verification request message to a storage network element, where the intention verification request message includes the identifier of the data owner, and the intention verification request message is used to request to verify whether the data owner allows the service consumer network element to use the data of the data owner. The authorization verification network element receives an intention verification response message from the storage network element. The authorization verification network element determines, based on the intention verification response message, that the data owner allows the service consumer network element to use the data of the data owner.

According to the foregoing solution, the authorization verification network element may verify, through the storage network element, whether the data owner allows the service consumer network element to use the data of the data owner, to ensure that consent of the data owner is given to data provided for the service consumer network element, thereby avoiding data abuse.

According to a second aspect, a data invocation method is provided. The method includes: A service consumer network element sends a data invocation request message to an authorization verification network element, where the data invocation request message includes an identifier of a data owner, and the data invocation request message is used to request to invoke data of the data owner. The service consumer network element receives a data invocation response message from the authorization verification network element, where the data invocation response message is used to reject the data invocation request message, the data invocation response message includes a cause value, and the cause value indicates a cause for rejecting the data invocation request message.

According to the foregoing solution, the service consumer network element obtains based on the data invocation response message sent by the authorization verification network element, the rejection cause value of the authorization verification network element. Therefore, the service consumer network element further determines, based on the cause value, whether the data of the data owner can be re-requested to be invoked.

With reference to the second aspect, in some implementations of the second aspect, the method further includes: The service consumer network element determines, based on the cause value, not to request to obtain the data from the authorization verification network element.

According to the foregoing solution, the service consumer network element may determine, based on the cause value, whether to re-request to obtain the data from the authorization verification network element. In an example, in response to that the cause value indicates that the rejection cause is that the service consumer network element does not have a capability of stopping data processing, the service consumer network element determines not to request to obtain the data from the authorization verification network element.

With reference to the second aspect, in some implementations, not claimed, of the second aspect, the method further includes: The service consumer network element receives a capability information query request message from the authorization verification network element, where the capability information query request message is used to request to query whether the service consumer network element has the capability of supporting stopping data processing. In response to the capability information query request message, the service consumer network element sends capability indication information to the authorization verification network element, where the capability indication information indicates whether the service consumer network element has the capability.

According to the foregoing solution, the service consumer network element may report the capability indication information based on the capability information query request of the authorization verification network element, to indicate whether the service consumer network element supports stopping processing data of a terminal device, so that the authorization verification network element may determine, depending on whether the service consumer network element supports stopping processing the data of the terminal device, whether to execute a data invocation request of the service consumer network element.

According to a third aspect, a data invocation apparatus is provided. The data invocation apparatus includes: a transceiver unit, configured to receive a data invocation request message from a service consumer network element, where the data invocation request message includes an identifier of a data owner, and the data invocation request message is used to request to invoke data of the data owner; and a processing unit, configured to determine whether the service consumer network element has a capability of supporting stopping data processing, where the capability indicates that the service consumer network element supports stopping processing data obtained from an authorization verification network element. The processing unit is further configured to: in response to that the service consumer network element does not have the capability, reject the data invocation request message.

With reference to the third aspect, in some implementations of the third aspect, the transceiver unit is specifically configured to receive capability indication information from the service consumer network element. In response to the data invocation request message, the processing unit is specifically configured to determine, based on the capability indication information, whether the service consumer network element has the capability of supporting stopping data processing.

With reference to the third aspect, in some implementations of the third aspect, in response to that the transceiver unit receives no capability indication information from the service consumer network element, or in response to that a context of the apparatus stores no capability indication information of the service consumer network element, the processing unit is specifically configured to determine that the service consumer network element does not have the capability of supporting stopping data processing, where the capability indication information indicates whether the service consumer network element has the capability.

With reference to the third aspect, in some implementations, not claimed, of the third aspect, the transceiver unit is further configured to send a capability information query request message to the service consumer network element, where the capability information query request message is used to request to query whether the service consumer network element has the capability.

With reference to the third aspect, in some implementations of the third aspect, the transceiver unit is specifically configured to send a data invocation response message to the service consumer network element, where the data invocation response message is used to reject the data invocation request message, the data invocation response message includes a cause value, and the cause value indicates a cause for rejecting the data invocation request message.

With reference to the third aspect, in some implementations of the third aspect, the apparatus further includes: The authorization verification network element determines that the data owner allows the service consumer network element to use the data of the data owner.

With reference to the third aspect, not claimed, in some implementations of the third aspect, the transceiver unit is specifically configured to send an intention verification request message to a storage network element, where the intention verification request message includes the identifier of the data owner, and the intention verification request message is used to request to verify whether the data owner allows the service consumer network element to use the data of the data owner. The transceiver unit is further specifically configured to receive an intention verification response message from the storage network element. The processing unit is specifically configured to determine, based on the intention verification response message, that the data owner allows the service consumer network element to use the data of the data owner.

According to a fourth aspect, a data invocation apparatus is provided. The data invocation apparatus includes: a transceiver unit, configured to send a data invocation request message to an authorization verification network element, where the data invocation request message includes an identifier of a data owner, and the data invocation request message is used to request to invoke data of the data owner. The transceiver unit is further configured to receive a data invocation response message from the authorization verification network element, where the data invocation response message is used to reject the data invocation request message, the data invocation response message includes a cause value, and the cause value indicates a cause for rejecting the data invocation request message.

With reference to the fourth aspect, in some implementations of the fourth aspect, the apparatus further includes: a processing unit, configured to determine, based on the cause value, not to request to obtain the data from the authorization verification network element.

With reference to the fourth aspect, in some implementations of the fourth aspect, the transceiver unit is further configured to receive a capability information query request message from the authorization verification network element, where the capability information query request message is used to request to query whether a service consumer network element has a capability of supporting stopping data processing. In response to the capability information query request message, the transceiver unit is further configured to send capability indication information to the authorization verification network element, where the capability indication information indicates whether the service consumer network element has the capability.

According to a fifth aspect, a communication apparatus is provided. The apparatus is configured to perform the methods provided in the first aspect to the fourth aspect. Specifically, the apparatus may include units and/or modules, for example, a processing unit and/or a communication unit, configured to perform the methods provided in the first aspect to the fourth aspect.

In an implementation, the apparatus is a network device. For example, the apparatus is an authorization verification network element. When the apparatus is the network device, the communication unit may be a transceiver or an input/output interface, and the processing unit may be a processor.

In another implementation, the apparatus is a chip, a chip system, or a circuit used in the network device. When the apparatus is the chip, the chip system, or the circuit used in the communication device, the communication unit may be an input/output interface, an interface circuit, an output circuit, an input circuit, a pin, a related circuit, or the like on the chip, the chip system, or the circuit, and the processing unit may be a processor, a processing circuit, a logic circuit, or the like.

In a possible case, the apparatus is a chip, a chip system, or a circuit in the authorization verification network element. In this case, the apparatus may include the unit and/or the module, for example, the processing unit and/or the communication unit, configured to perform the method provided in the first aspect.

In another implementation, the apparatus is a service consumer network element. When the apparatus is the service consumer network element, the communication unit may be a transceiver or an input/output interface, and the processing unit may be a processor.

In a possible case, the apparatus is the service consumer network element or a chip, a chip system, or a circuit in the service consumer network element. In this case, the apparatus may include the unit and/or the module, for example, the processing unit and/or the communication unit, configured to perform the method provided in the second aspect.

Optionally, the transceiver may be a transceiver circuit. Optionally, the input/output interface may be an input/output circuit.

According to a sixth aspect, a communication apparatus is provided. The apparatus includes: a memory, configured to store a program, and a processor, configured to execute the program stored in the memory. When the program stored in the memory is executed, the processor is configured to perform the methods provided in the first aspect and the second aspect.

According to a seventh aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the foregoing information, the processor outputs the foregoing information to a transceiver, so that the transceiver transmits the foregoing information. After the foregoing information is outputted by the processor, other processing may further need to be performed on the foregoing information before the foregoing information arrives at the transceiver. Similarly, when the processor receives the foregoing inputted information, the transceiver obtains/receives the foregoing information, and inputs the foregoing information into the processor. Further, after the transceiver receives the foregoing information, other processing may need to be performed on the foregoing information before the foregoing information is inputted into the processor.

According to the foregoing principle, for example, receiving the request message mentioned in the foregoing method may be understood as receiving the inputted information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to an eighth aspect, a computer-readable storage medium is provided. The computer-readable medium stores program code executed by a device, and the program code is for performing the methods provided in the first aspect and the second aspect.

According to a ninth aspect, a computer program product including instructions is provided. When the computer program product runs on a computer, the computer is enabled to perform the methods provided in the first aspect and the second aspect.

According to a tenth aspect, a chip is provided. The chip includes a processor and a communication interface. The processor reads, through the communication interface, instructions stored in a memory, to perform the methods provided in the first aspect and the second aspect.

Optionally, in an implementation, the chip may further include the memory. The memory stores the instructions. The processor is configured to execute the instructions stored in the memory. When the instructions are executed, the processor is configured to perform the methods provided in the first aspect and the second aspect.

### BRIEF DESCRIPTION OF DRAWINGS

FIG. 1 is a schematic diagram of a network structure applicable to an embodiment of this application;
FIG. 2 is a schematic flowchart of a data invocation method;
FIG. 3 is a flowchart of an example of a data invocation method according to an embodiment of this application;
FIG. 4 is a flowchart of an example of another data invocation method according to an embodiment of this application;
FIG. 5 is a flowchart of an example of still another data invocation method according to an embodiment of this application;
FIG. 6 is a schematic block diagram of a data invocation apparatus according to an embodiment of this application; and
FIG. 7 is a schematic diagram of a structure of a data invocation apparatus according to an embodiment of this application.

### DESCRIPTION OF EMBODIMENTS

To make objectives, technical solutions, and advantages of this application clearer, the following describes the technical solutions of this application with reference to the accompanying drawings. A specific operation method in a method embodiment may also be applied to an apparatus embodiment or a system embodiment. In descriptions of this application, unless otherwise specified, "a plurality of" means two or more.

In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

It may be understood that various numbers used in this application are merely differentiated for ease of description, but are not used to limit the scope of this application. Sequence numbers of the foregoing processes do not mean execution sequences, and the execution sequences of the processes should be determined based on functions and internal logic of the processes.

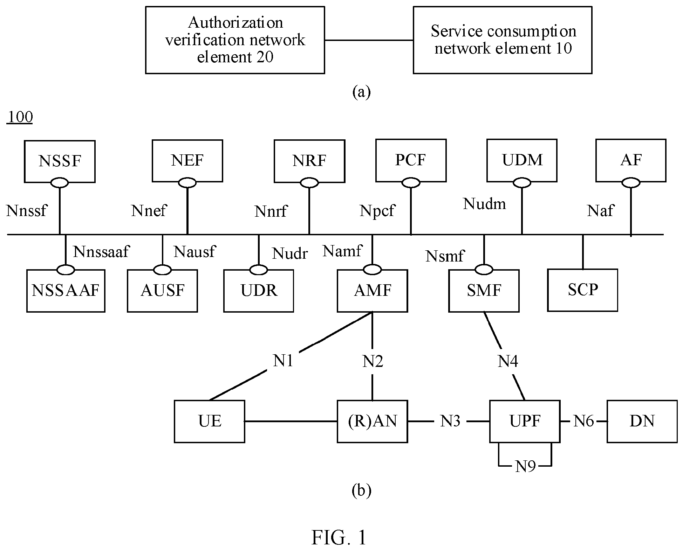

To resolve the problem mentioned in the background, as shown in (a) in FIG. 1, this application provides a communication system. The communication system includes a service consumer network element (10) and an authorization verification network element (20). The authorization verification network element is configured to: receive a data invocation request message from the service consumer network element, where the data invocation request message includes an identifier of a data owner, and the data invocation request message is used to request to invoke data of the data owner; determine whether the service consumer network element has a capability of supporting stopping data processing; and when the service consumer network element does not have the capability of supporting stopping data processing, reject the data invocation request message of the service consumer network element.

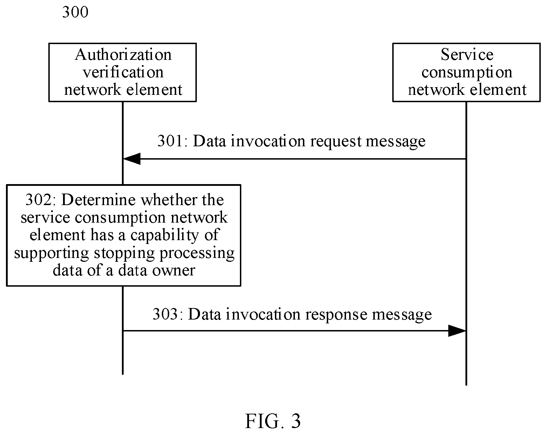

It should be understood that for a specific interaction process between the network elements in (a) in FIG. 1, refer to a method procedure in FIG. 3. For a specific implementation solution, refer to detailed descriptions in a method 300.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an internet of things (internet of things, IoT) communication system or another communication system.

(b) in FIG. 1 is a schematic diagram of a 5th generation (5th generation, 5G) network architecture that is based on a service-based architecture.

The 5G network architecture shown in (b) in FIG. 1 may include three parts: a terminal device part, a data network (data network, DN) part, and an operator network part. The following briefly describes functions of some network elements in the 5G network architecture.

The operator network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, a session management function (session management function, SMF) network element, a radio access network (radio access network, RAN) network element, a user plane function (user plane function, UPF) network element, and the like. In the foregoing operator network, a part other than a radio access network part may be referred to as a core network part.
1. A terminal device (terminal device) may also be referred to as a user equipment (user equipment, UE), is a device having a wireless transceiver function, and may be deployed on land, including an indoor or outdoor device, or a handheld or vehicle-mounted device, may be deployed on a water surface (for example, on a ship), or may be deployed in the air (for example, on an airplane, a balloon, and a satellite). The terminal device may be a mobile phone (mobile phone), a pad (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal device herein refers to a 3rd generation partnership project (3rd generation partnership project, 3GPP) terminal. For ease of description, this application is subsequently described by using an example in which the UE represents the terminal device.

The terminal device may establish a connection to the operator network through an interface (for example, N1) provided by the operator network, and use a service such as data and/or voice provided by the operator network. The terminal device may further access a DN through the operator network, and use an operator service deployed on the DN and/or a service provided by a third party. The third party may be a service party other than the operator network and the terminal device, and may provide another service such as data and/or voice for the terminal device. A specific representation form of the third party may be specifically determined based on an actual application scenario, and is not limited herein.

2. The radio access network (radio access network, RAN) network element is referred to as a RAN for short below, and corresponds to an access network device.

The RAN is a subnet of the operator network, and is an implementation system between a service node in the operator network and the terminal device. To access the operator network, the terminal device first accesses the RAN, and then may be connected to the service node in the operator network via the RAN. A RAN device in this application is a device that provides a wireless communication function for the terminal device, and the RAN device is also referred to as an access network device. The RAN device in this application includes but is not limited to: a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving (transmitting and receiving point, TRP), a transmitting point (transmitting point, TP), a mobile switching center, and the like.

3. A user plane function (user plane function, UPF) is for packet routing and forwarding, quality of service (quality of service, QoS) handling for user plane data, and the like.

In the 5G communication system, the user plane network element may be a user plane function (user plane function, UPF) network element. In the future communication system, the user plane network element may still be a UPF network element, or may have another name. This is not limited in this application.

4. Multicast/Broadcast-user plane function (multicast/broadcast-user plane function, MB-UPF)

The MB-UPF is mainly responsible for transmitting a multicast/broadcast stream to the RAN (or the UPF), and may perform packet filtering and distribution on the multicast/broadcast stream, to implement QoS enhancement, counting/reporting, and the like of a multicast/broadcast service. In this application, no strict distinction is made between the MB-UPF and the UPF, and an (MB-)UPF indicates an MB-UPF or a UPF.

5. A data network (data network, DN) is a network for providing data transmission.

In the 5G communication system, the data network network element may be a data network network element. In the future communication system, the data network network element may still be a DN network element, or may have another name. This is not limited in this application.

### 6. Access and mobility management network element

The access and mobility management network element is mainly configured for mobility management, access management, and the like, and may be configured to implement functions other than session management in an MME function, for example, lawful interception, access authorization/authentication, and the like.

In the 5G communication system, the access and mobility management network element may be an access and mobility management function (access and mobility management function, AMF). In the future communication system, the access and mobility management device may still be an AMF, or may have another name. This is not limited in this application.

7. A session management function (session management function, SMF) is mainly for session management, user equipment internet protocol (internet protocol, IP) address allocation and management, selection and management of a user plane function, a termination point of policy control and charging function interfaces, downlink data notification, and the like.

In the 5G communication system, the session management network element may be a session management function network element. In the future communication system, the session management network element may still be an SMF network element, or may have another name. This is not limited in this application.

### 8. Multicast/Broadcast-session management function (multicast/broadcast-session management function, MB-SMF)

The MB-SMF is mainly responsible for multicast/broadcast session management, controlling multicast/broadcast transmission, and performing corresponding configuration on the MB-UPF and the RAN according to a multicast/broadcast service policy rule that is provided by a PCF or locally configured, to complete transmission of the multicast/broadcast stream. In this application, no strict distinction is made between the MB-SMF and the SMF, and an (MB-)SMF indicates an MB-SMF or an SMF.

9. A policy control function (policy control function, PCF) is a unified policy framework for guiding network behavior, and provides policy rule information for control plane function network elements (for example, the AMF and the SMF).

In a 4G communication system, the policy control network element may be a policy and charging rules function (policy and charging rules function, PCRF) network element. In the 5G communication system, the policy control network element may be a policy control function PCF network element. In the future communication system, the policy control network element may still be a PCF network element, or may have another name. This is not limited in this application.

10. An application function (application function, AF) is used to perform application-affected data routing, access a network exposure function network element wirelessly, interact with a policy framework for policy control, and the like.

In the 5G communication system, the application network element may be an application function network element. In the future communication system, the application network element may still be an AF network element, or may have another name. This is not limited in this application.

11. A unified data management (unified data management, UDM) is for UE identification handling, access authentication, registration, mobility management, and the like.

In the 5G communication system, the data management network element may be a unified data management network element. In the 4G communication system, the data management network element may be a home subscriber server (home subscriber server, HSS) network element. In the future communication system, the unified data management may still be a UDM network element, or may have another name. This is not limited in this application.

12. A unified data repository (unified data repository, UDR) mainly includes the following functions: storage and retrieval of data such as subscription data, policy data, application data, and other types of data.

13. An authentication server function (authentication server function, AUSF) is configured to: provide an authentication service, generate a key to implement bidirectional authentication on the user equipment, and support a unified authentication framework.

In the 5G communication system, the authentication server may be an authentication server function network element. In the future communication system, the authentication server function network element may still be an AUSF network element, or may have another name. This is not limited in this application.

14. Data network (data network, DN): The DN is a network located outside the operator network. The operator network may access a plurality of DNs, and a plurality of services may be deployed on the DN, to provide a service such as data and/or voice for the terminal device. For example, the DN is a private network of a smart factory, a sensor installed in a workshop of the smart factory may be a terminal device, a control server of the sensor is deployed in the DN, and the control server may provide a service for the sensor. The sensor may communicate with the control server to obtain instructions of the control server, transmit collected sensor data to the control server according to the instructions. For another example, the DN is an internal office network of a company, a mobile phone or a computer of an employee of the company may be a terminal device, and the mobile phone or the computer of the employee may access information, data resources, and the like on the internal office network of the company.

In (b) in FIG. 1, Nausf, Nnef, Npcf, Nudm, Naf, Namf, Nsmf, N1, N2, N3, N4, and N6 are interface sequence numbers. For meanings of the interface sequence numbers, refer to meanings defined in a 3GPP standard protocol. This is not limited herein.

In the network architecture shown in (b) in FIG. 1, network elements may communicate with each other through interfaces shown in the figure. As shown in the figure, the UE and the AMF may interact with each other through an N1 interface, and an interaction message may be referred to as, for example, an N1 message (N1 Message). The RAN and the AMF may interact with each other through an N2 interface, and the N2 interface is configured for transmission of a non-access stratum (non-access stratum, NAS) message and the like. The RAN and the UPF may interact with each other through an N3 interface, and the N3 interface is configured for transmission of user plane data and the like. The SMF and the UPF may interact with each other through an N4 interface, and the N4 interface is configured for transmission of information such as tunnel identifier information of an N3 connection, data buffering indication information, and a downlink data notification message. The UPF and the DN may interact with each other through an N6 interface, and the N6 interface is configured for transmission of user plane data and the like. Relationships between other interfaces and the network elements are shown in FIG. 1. For brevity, details are not described herein.

It should be understood that the foregoing network architecture used in embodiments of this application is merely an example of a network architecture described from the perspective of a service-based architecture, and a network architecture applicable to embodiments of this application is not limited thereto. Any network architecture that can implement functions of the foregoing network elements is applicable to embodiments of this application.

It should be further understood that the AMF, the SMF, the UPF, and a network slice selection function (network slice selection function, NSSF) network element, the NEF, the AUSF, the NRF, the PCF, and the UDM shown in FIG. 1 may be understood as network elements configured to implement different functions in a core network, for example, may be combined as required to form a network slice. These core network elements may be independent devices, or may be integrated into a same device to implement different functions. Specific forms of the foregoing network elements are not limited in this application.

It should be further understood that the foregoing names are defined merely for distinguishing between different functions, and should not constitute any limitation on this application. This application does not exclude a possibility that another name is used in a 5G network and another future network. For example, in a 6G network, some or all of the foregoing network elements may still use terms in 5G, or may use other names. Names of the interfaces between the network elements in FIG. 1 are merely examples. In a specific implementation, the names of the interfaces may be other names. This is not specifically limited in this application. In addition, names of messages (or signaling) transmitted between the foregoing network elements are merely examples, and do not constitute any limitation on functions of the messages.

It may be understood that the foregoing network elements or functions may be network elements in a hardware device, may be software functions run on dedicated hardware, or may be virtualized functions instantiated on a platform (for example, a cloud platform). For ease of description, this application is subsequently described by using an example in which a network device is an access and mobility management AMF network element and a base station is a radio access network RAN.

It should be understood that the foregoing network architecture used in embodiments of this application is merely an example, and a network architecture applicable to embodiments of this application is not limited thereto. Any network architecture that can implement functions of the foregoing network elements is applicable to embodiments of this application.

For example, in some network architectures, network function network element entities such as an AMF, an SMF network element, a PCF network element, a BSF network element, and a UDM network element are all referred to as network function (network function, NF) network elements. Alternatively, in some other network architectures, a set of network elements such as an AMF, an SMF network element, a PCF network element, a BSF network element, and a UDM network element may be referred to as a control plane function network element.

The network architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in embodiments of this application are also applicable to similar technical problems.

Aspects or features in embodiments of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable medium" may include but is not limited to: a radio channel and various other media that can store, include, and/or carry instructions and/or data.

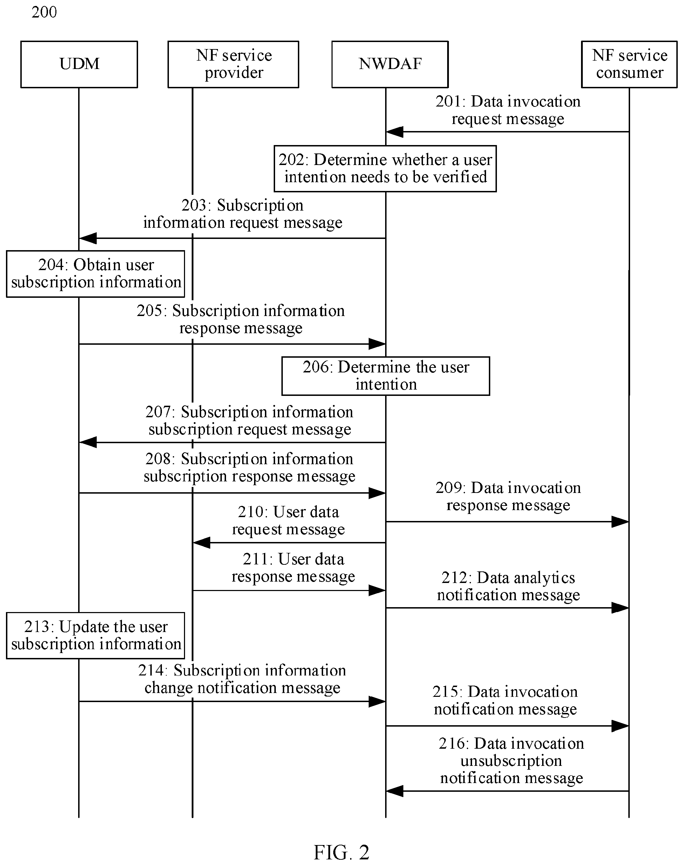

The following briefly describes a data processing method 200 with reference to FIG. 2. It can be seen from FIG. 2 that the method 200 includes the following steps.

201: An NF service consumer sends a data invocation request message to an NWDAF.

For example, the NF service consumer may also be referred to as an NF consumer, and the NF service consumer may be, for example, a network element that requests analytics data, for example, an AF or a PCF. The NF service consumer sends the data invocation request (Nnwdaf_AnalyticsSubscription_Subscribe Request) message to the NWDAF. The message includes an identifier (for example, an SUPI of a user equipment) of the user equipment and an analytics identifier (Analytics ID). The analytics identifier indicates current analytics. For example, the analytics identifier identifies user equipment mobility analytics (UE mobility analytics). For another example, the analytics identifier identifies user equipment communication analytics (UE communication analytics).

202: The NWDAF determines whether a user intention needs to be verified.

For example, after receiving the data invocation request message from the NF service consumer, the NWDAF determines, according to a local policy, whether the user intention needs to be verified for current data invocation, that is, determines whether it is necessary to verify whether a user consents to the current data invocation.

For example, the NWDAF determines, according to the local policy, whether there is an operation performed on personal data of a user in the current invocation. If there is the operation performed on the personal data of the user in the current invocation, the NWDAF determines that the user intention needs to be verified for the current invocation. If there is no operation performed on the personal data of the user in the current invocation, the NWDAF determines that the user intention does not need to be verified for the current invocation.

When the user intention needs to be verified for the current data invocation, the NWDAF may obtain a verification result through a UDM. For example:

203: The NWDAF sends a subscription information request message to the UDM.

For example, the NWDAF sends the subscription information request (Nudm_SDM_Get Request) message to the UDM, where the subscription information request message is used to request to obtain subscription information of the user equipment, and the request message includes the identifier (for example, the SUPI of the user equipment) of the user equipment.

204: The UDM obtains user subscription information.

For example, the UDM receives the subscription information request message from the NWDAF, and then obtains the subscription information of the user equipment based on the identifier that is of the user equipment and that is carried in the subscription information request message. The subscription information includes an operation indication and a user intention indication.

A data operation indication indicates an operation performed on data. A specific form of the data operation indication may be an API name, and optionally, an API input may be further included. The user intention indication indicates whether the user consents to the operation that is indicated by the data operation indication and that is performed on the data. For example, if the user intention indication is 1, it indicates that the user consents to the operation that is indicated by the data operation indication and that is performed on the data. For another example, if the user intention indication is 0, it indicates that the user does not consent to the operation that is indicated by the data operation indication and that is performed on the data.

Optionally, the subscription information may further include an identifier of a data processor. The identifier of the data processor may be a PLMN ID, an AS ID, or the like.

If the subscription information includes the identifier of the data processor, the user intention indication indicates whether to allow the data processor to perform an operation corresponding to the data operation indication on the data.

205: The UDM sends a subscription information response message to the NWDAF.

For example, after obtaining the user subscription information, the UDM sends the subscription information response (Nudm_SDM_Get Response) message to the NWDAF, where the subscription information response message includes the user intention indication and the data operation indication, and optionally further includes the identifier of the data processor.

206: The NWDAF determines the user intention.

For example, the NWDAF receives the subscription information response message from the UDM, and then determines, based on information carried in the subscription information response message, whether the user consents to the operation corresponding to the data operation indication. For example, the NWDAF searches, from the data operation indication and the user intention indication that are carried in the subscription information response message, for a user intention corresponding to a data operation corresponding to the analytics identifier carried in the data invocation request message in step 201. If the user intention is consenting, it indicates that the user consents to the operation corresponding to the analytics identifier. If the user intention is not consenting, it indicates that the user does not consent to the operation corresponding to the analytics identifier.

207: The NWDAF sends a subscription information subscription request message to the UDM.

For example, if the NWDAF determines that the user intention is that the user consents to the operation corresponding to the data operation indication, the NWDAF sends the subscription information subscription request (Nudm_SDM_Subscribe Request) message to the UDM, where the subscription information request message includes the identifier (for example, the SUPI of the user equipment) of the user equipment. Optionally, the subscription information request message further includes a subscription type of the user equipment, and the subscription type indicates a subscription type consented to by the user equipment. The subscription information request message is used to request to subscribe to a subscription information change event. After the subscription succeeds, once the subscription information of the user equipment changes, the UDM notifies the NWDAF of the change.

208: The UDM sends a subscription information subscription response message to the NWDAF.

For example, after receiving the subscription information subscription request message from the NWDAF, the UDM sends the subscription information subscription response (Nudm_SDM_Subscribe Response) message to the NWDAF, where the subscription information subscription response message indicates that the subscription to the subscription information change event succeeds.

209: The NWDAF sends a data invocation response message to the NF service consumer.

For example, if in step 206, the NWDAF determines that the user intention is not consenting to the operation corresponding to the data operation indication, the NWDAF may skip step 207 and step 208, and directly send the data invocation response (Nnwdaf_AnalyticsSubscription_Subscribe Response) message to the NF service consumer, where the data invocation response message indicates that a data invocation request fails.

If in step 206, the NWDAF determines that the user intention is consenting to the operation corresponding to the data operation indication, the NWDAF sends the data invocation response (Nnwdaf_AnalyticsSubscription_Subscribe Response) message to the NF service consumer, where the data invocation response message indicates that a data invocation request succeeds.

210: The NWDAF sends a user data request message to an NF service provider.

For example, if the NWDAF determines that the user intention is consenting to the operation corresponding to the data operation indication, the NWDAF may send the user data request message to the NF service provider (NF provider), where the user data request message includes the identifier (for example, the SUPI of the user equipment) of the user equipment, and the user data request message is used to request to obtain user data of the user equipment.

211: The NF service provider sends a user data response message to the NWDAF.

For example, after receiving the user data request message from the NWDAF, the NF service provider sends the user data response (Nnf_EventExposure_Notify) message to the NWDAF, where the user data response message includes the user data requested by the NWDAF. In an example, the NF service provider herein is an AMF, and the user data herein is location data (for example, a TAI) of the user equipment. In another example, the NF service provider herein is an SMF, and the user data herein is communication data (for example, a communication interval or a communication rate) of the user equipment.

212: The NWDAF sends a data analytics notification message to the NF service consumer.

For example, the NWDAF obtains the user data from the user data response message from the NF service provider, and performs analytics processing on the user data based on analytics (analytics indicated by the analytics identifier carried in the data invocation request message in step 201) requested by the service consumer, to obtain an analytics result. The analytics result may include, for example, location statistics information of the user equipment or communication feature information of the user equipment.

Further, the NWDAF sends the data analytics notification (Nnwdaf_AnalysisSubscription_Notify) message to the NF service consumer, where the data analytics notification message includes the analytics result.

213: The UDM updates the user subscription information.

For example, when the user intention indication in the user subscription information in step 204 is that the user equipment consents to the operation corresponding to the data operation indication, but in this case, the user expects to exercise a right of revocation, that is, the user equipment no longer consents to the operation corresponding to the data operation indication, the user subscription information changes. For example, if the user equipment no longer consents to analytics performed on mobility of the user equipment, a user intention that is in the subscription information and that is corresponding to a data operation corresponding to an analytics identifier being the user equipment mobility analytics (UE mobility Analytics) changes to "not consenting". Correspondingly, the UDM updates the user subscription information.

214: The UDM sends a subscription information change notification message to the NWDAF.

For example, because the NWDAF subscribes to the subscription information change event, after the UDM updates the user subscription information, the UDM sends the subscription information change notification message to the NWDAF, where the subscription information change notification message carries changed subscription information.

215: The NWDAF sends a data invocation notification message to the NF service consumer.

For example, if the NWDAF receives the subscription information change notification message sent by the UDM, and determines, based on the subscription information carried in the subscription information change notification message, that the user equipment no longer consents to the operation corresponding to the data operation indication, the NWDAF sends the data invocation notification (Nnwdaf_AnalyticsSubscription_Notify) message to the NF service consumer, where the data invocation notification message includes a termination indication (Termination Request), and the termination indication indicates the NF service consumer to terminate user data processing.

216: The NF service consumer sends a data invocation unsubscription notification message to the NWDAF.

For example, after receiving the data invocation notification message sent by the NWDAF, the NF service consumer terminates the user data processing based on the termination indication in the data invocation notification message, and sends the data invocation unsubscription notification message to the NWDAF, to unsubscribe from an analytics event in step 201.

However, in the foregoing solution, if the NF service consumer does not support stopping data processing, the user cannot exercise the right of revocation, and legal risks may exist.

FIG. 3 is a flowchart of an example of a data invocation method 300 according to an embodiment of this application. The method 300 includes the following steps.

301: A service consumer network element sends a data invocation request message to an authorization verification network element.

For example, the data invocation request message includes an identifier of a data owner. The data invocation request message is used to request to invoke data of the data owner. In other words, the data invocation request message is used to request to process data of the data owner. The data owner may be, for example, a terminal device or another network element that stores data.

Optionally, the data invocation request message may further include an operation indication, and the operation indication indicates a specific operation performed by the service consumer network element on the data of the data owner, for example, collecting, reading, analyzing, or sharing.

It should be understood that the service consumer network element herein may be any type of network element that requests data or requests a service. The name is merely an example, and does not constitute any limitation on a function or a feature of the network element. For example, the service consumer network element may also be referred to as a data use network element, a data request network element, a data user, or the like. Specifically, in a 5G system, the service consumer network element may be a network element that requests analytics data, for example, an AF or a PCF.

302: The authorization verification network element determines whether the service consumer network element has a capability of supporting stopping data processing.

For example, after receiving the data invocation request message from the service consumer network element, the authorization verification network element determines whether the service consumer network element has the capability of supporting stopping data processing. The capability of supporting stopping data processing indicates that the service consumer network element supports stopping processing data obtained from the authorization verification network element.

The supporting stopping processing data obtained from the authorization verification network element may indicate that the service consumer network element supports stopping, as indicated by the authorization verification network element, processing the data obtained from the authorization verification network element. In other words, the service consumer network element may identify indication information that is sent by the authorization verification network element and that is for notifying data processing, and support obtaining the data from the authorization verification network element based on the indication information.

The supporting stopping processing data obtained from the authorization verification network element may indicate that the service consumer network element supports stopping invoking the data via the authorization verification network element, and/or the service consumer network element supports deleting the data obtained via the authorization verification network element.

The following describes examples of several possible implementations in which the authorization verification network element determines whether the service consumer network element has the capability of supporting stopping data processing.

In an implementation, the service consumer network element reports capability indication information of the service consumer network element to the authorization verification network element. The capability indication information indicates whether the service consumer network element has the capability of supporting stopping data processing. In other words, the capability indication information indicates that the service consumer network element supports stopping data processing, or the indication information indicates that the service consumer network element does not support stopping data processing. The capability indication information may be carried in the data invocation request message, or may be carried in any message before the data invocation request message. After receiving the capability indication information of the service consumer network element, the authorization verification network element may store the capability indication information in a context, where the capability indication information is associated with an identifier of the service consumer network element. The authorization verification network element may determine, based on the capability indication information of the service consumer network element, whether the service consumer network element has the capability of supporting stopping data processing.

In another implementation, when the service consumer network element has the capability of supporting stopping data processing, the service consumer network element reports, to the authorization verification network element, indication information indicating that the service consumer network element has the capability of supporting stopping data processing. The indication information may be carried in the data invocation request message, or may be carried in any message before the data invocation request message. After receiving the indication information, the authorization verification network element may store the indication information in a context. In a case, the authorization verification network element receives the data invocation request message from the service consumer network element. If the message carries the indication information indicating that the service consumer network element has the capability of supporting stopping data processing, or the authorization verification network element obtains, from the context, the indication information that indicates that the service consumer network element has the capability of supporting stopping data processing and that is associated with the carried identifier of the service consumer network element, the authorization verification network element determines that the service consumer network element supports stopping processing the data of the data owner. In another case, the authorization verification network element receives the data invocation request message from the service consumer network element. If the message does not carry the indication information indicating that the service consumer network element has the capability of supporting stopping data processing, and the authorization verification network element does not obtain, from the context, the indication information that indicates that the service consumer network element has the capability of supporting stopping data processing and that is associated with the identifier of the service consumer network element, the authorization verification network element determines that the service consumer network element does not support stopping processing the data of the data owner.

In still another implementation, after the authorization verification network element receives the data invocation request message from the service consumer network element, the authorization verification network element sends a capability information query request message to the service consumer network element, where the capability information query request message is used to request to query whether the service consumer network element supports stopping processing the data of the data owner. In a case, the service consumer network element receives the capability information query request message from the authorization verification network element, and then the service consumer network element sends a capability information query response message to the authorization verification network element, where the capability information query response message includes capability indication information, and the capability indication information indicates whether the service consumer network element supports stopping processing the data of the data owner. Correspondingly, the authorization verification network element receives the capability information query response message from the service consumer network element, and then determines, based on the capability indication information carried in the response message, whether the service consumer network element has the capability of supporting stopping data processing. In another case, the service consumer network element receives the capability information query request message from the authorization verification network element. If the service consumer network element has the capability of supporting stopping data processing, the service consumer network element sends a capability information query response message to the authorization verification network element, where the capability information query response message includes indication information indicating that the service consumer network element has the capability of supporting stopping data processing. Correspondingly, the authorization verification network element receives the capability information query response message from the service consumer network element, and then determines, based on the indication information carried in the response message, that the service consumer network element has the capability of supporting stopping data processing. If the service consumer network element does not have the capability of supporting stopping data processing, the service consumer network element may not make a reply. After sending the capability information query request message to the service consumer network element, if the authorization verification network element receives no response message from the service consumer network element within specified time, the authorization verification network element determines that the service consumer network element does not have the capability of supporting stopping data processing.

303: The authorization verification network element sends a data invocation response message to the service consumer network element.

For example, if the authorization verification network element determines that the service consumer network element does not have the capability of supporting stopping data processing, the service consumer network element rejects a data invocation request of the service consumer network element. For example, the authorization verification network element sends the data invocation response message to the service consumer network element, where the data invocation response message is used to reject the data invocation request message, the data invocation response message includes a cause value, and the cause value indicates a cause for rejecting the data invocation request message. In an example, the cause value indicates that the rejection cause is that the service consumer network element does not have the capability of supporting stopping data processing. Correspondingly, the service consumer network element receives the data invocation response message. The service consumer network element determines, based on the cause value carried in the response message, not to request to obtain the data of the data owner from the authorization verification network element; the service consumer network element determines not to request to obtain data of any data owner from the authorization verification network element; or the service consumer network element determines not to request to obtain, from the authorization verification network element, user privacy-related data of any data owner.

For example, if the authorization verification network element determines that the service consumer network element has the capability of supporting stopping data processing, further, the service consumer network element verifies, via a storage network element, whether the data owner allows the service consumer network element to use the data of the data owner. For example, the authorization verification network element sends an intention verification request message to the storage network element, where the intention verification request message includes the identifier of the data owner, and the intention verification request message is used to request to verify whether the data owner allows the service consumer network element to use the data of the data owner. In other words, the intention verification request message is used to request to verify whether the data owner allows the service consumer network element to process the data of the data owner. Correspondingly, the storage network element receives the intention verification request message from the service consumer network element. The storage network element obtains subscription information of the data owner based on the intention verification request message. The storage network element determines, based on the subscription information, whether the data owner allows the service consumer network element to use the data of the data owner. Then, the storage network element sends an intention verification response message to the authorization verification network element, where the intention verification response message is used to respond to the intention verification request message, and the intention verification response message indicates whether the data owner allows the service consumer network element to use the data of the data owner. Correspondingly, the authorization verification network element receives the intention verification response message, and determines, based on the intention verification response message, whether the data owner allows the service consumer network element to use the data of the data owner.

If the data owner does not allow the service consumer network element to use the data of the data owner, the authorization verification network element sends the data invocation response message to the service consumer network element, where the data invocation response message is used to reject the data invocation request of the service consumer network element, the data invocation response message carries the cause value, and the cause value indicates that the rejection cause is that the data owner does not allow the service consumer network element to use the data of the data owner. If the data owner allows the service consumer network element to use the data of the data owner, the authorization verification network element requests to obtain the data of the data owner from a service provider network element.

It should be understood that, after receiving the data invocation request message from the service consumer network element, the authorization verification network element may alternatively first verify whether the data owner allows the service consumer network element to use the data of the data owner. When the data owner does not allow the service consumer network element to use the data of the data owner, the authorization verification network element rejects the data invocation request of the service consumer network element, and may no longer verify whether the service consumer network element has the capability of supporting stopping data processing. When the data owner allows the service consumer network element to use the data of the data owner, the authorization verification network element further determines whether the service consumer network element has the capability of supporting stopping data processing.

In another possible implementation, after receiving the data invocation request message from the service consumer network element, the authorization verification network element verifies whether the data owner allows, when the service consumer network element does not have the capability of supporting stopping data processing, the service consumer network element to use the data of the data owner. If the data owner still allows, when the service consumer network element does not have the capability of supporting stopping data processing, the service consumer network element to use the data of the data owner, the authorization verification network element may directly perform a subsequent procedure without verifying whether the service consumer network element has the capability of supporting stopping data processing.

According to the foregoing solution, the authorization verification network element determines, depending on whether the service consumer network element has the capability of supporting stopping data processing, whether the data invocation request of the service consumer network element can be executed. If the service consumer network element does not have the capability of supporting stopping data processing, the authorization verification network element rejects execution of the data invocation request of the service consumer network element. On a basis of this solution, the data owner may exercise a right of revocation at any time even after allowing the service consumer network element to use the data of the data owner. In other words, the data owner may revoke, at any time, consent granted to the service consumer network element to invoke the data of the data owner, to avoid risks of related laws and regulations.

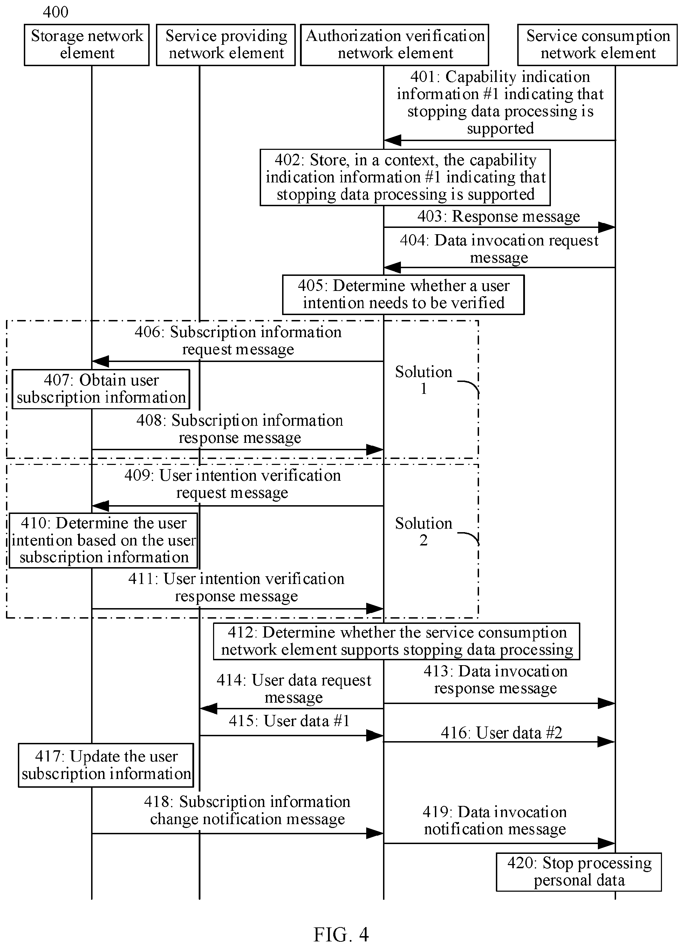

FIG. 4 is a flowchart of an example of a data invocation method 400 according to an embodiment of this application. The method 400 includes the following steps.

401: A service consumer network element sends, to an authorization verification network element, capability indication information #1 indicating that stopping data processing is supported.

For example, the indication information #1 indicates that the service consumer network element has a capability of supporting stopping user data processing. The capability of supporting stopping data processing indicates that the service consumer network element supports stopping processing data obtained from the authorization verification network element. Specifically, the capability of supporting stopping data processing may indicate that the service consumer network element supports stopping, as indicated by the authorization verification network element, processing the data obtained from the authorization verification network element.

The supporting stopping user data processing may include, for example, supporting revoking user data invocation, and/or deleting obtained personal data. That the service consumer network element has the capability of supporting stopping data processing indicates that the service consumer network element may stop processing the personal data based on an indication of a data verifier. For a specific implementation, refer to step 420. The user data herein represents relevant information of an identifiable natural person, or personal data information of a user.

It should be understood that, before requesting to invoke the user data, the service consumer network element should send, to the authorization verification network element, the capability indication information #1 indicating that stopping data processing is supported. For example, the service consumer network element may send, to the authorization verification network element in a process of establishing a connection to the authorization verification network element, the capability indication information #1 indicating that stopping data processing is supported. For another example, when the service consumer network element expects to process the user data (in other words, when the service consumer network element expects to invoke the user data), and the service consumer network element has the capability of supporting stopping data processing, the service consumer network element may send, to the authorization verification network element before requesting to invoke the user data, the capability indication information #1 indicating that stopping data processing is supported.

It should be further understood that when the service consumer network element does not have the capability of supporting stopping data processing, the service consumer network element may alternatively indicate, to the authorization verification network element, that the service consumer network element does not support stopping data processing. For example, the service consumer network element may use a reserved value to indicate the capability of stopping data processing. When the reserved value is 0, it indicates that the service consumer network element does not have the capability of supporting stopping data processing. When the reserved value is 1, it indicates that the service consumer network element has the capability of supporting stopping data processing.

It should be understood that the service consumer network element herein may be a party that requests a service among two parties that communicate based on a service-based interface. The service consumer network element may also be referred to as a data use network element, a data user, a request end, a data request network element, or the like. The service consumer network element may be, for example, a network element that requests analytics data, for example, an AF or a PCF. The authorization verification network element herein may also be referred to as an authorization verification network element, an authorization check network element, or the like. The authorization verification network element may be a network element that is configured to perform data analytics, for example, an NWDAF, a NEF, or a DCCF. It should be understood that different data analytics requirements of the service consumer network element may correspond to different authorization verification network elements.

402: The authorization verification network element stores, in a context, the capability indication information #1 indicating that stopping data processing is supported.

For example, after receiving, from the service consumer network element, the capability indication information #1 indicating that stopping data processing is supported, the authorization verification network element stores, in the context, the capability indication information #1 indicating that stopping data processing is supported. The capability indication information #1 indicating that stopping data processing is supported is associated with an identifier of the service consumer network element.

403: Optionally, the authorization verification network element sends a response message to the service consumer network element.

For example, the response message may include an ACK, to indicate that the authorization verification network element successfully receives the capability indication information #1 indicating that stopping data processing is supported. Optionally, the response message may further include capability indication information #2 indicating that stopping data processing is supported, where the capability indication information #2 indicating that stopping data processing is supported indicates that the authorization verification network element has a capability of supporting stopping processing the personal data. That the authorization verification network element has the capability of supporting stopping processing the personal data indicates that the authorization verification network element may notify the service consumer network element to stop processing the personal data. For a specific implementation, refer to step 419.

404: The service consumer network element sends a data invocation request message to the authorization verification network element.

For example, the service consumer network element sends the data invocation request message to the authorization verification network element, where the data invocation request message is used to request to perform an operation on the user data. The data invocation request message includes an identifier #1 of a user equipment, and the identifier #1 of the user equipment may be an SUPI, a GPSI, or the like of the user equipment. This is not limited herein.

Optionally, the data invocation request message may further include a data invocation identifier, where the data invocation identifier may indicate a specific operation performed on the user data, for example, collecting, reading, analyzing, or sharing the user data.

A specific form of the data invocation identifier may be an API name, for example, Nnef_Location, Nnef_UEIdentifier UEIdentifier_Get, or Nnwdaf_AnalyticsSubscription_Subscribe.

In an example, the service consumer network element is an application server AS of an application, and the authorization verification network element is a NEF. The AS invokes an API (for example, Nnef_UEIdentifier UEIdentifier_Get, where inputted user information may be set to an IP address of a UE) that is exposed by the NEF and that requests a UE identifier. To be specific, in this case, the data invocation identifier is Nnef_UEIdentifier_Get, the operation indicates that the AS requests to obtain identification information of a user corresponding to the inputted IP address, and the data invocation request message for invoking the API indicates the AS to perform a read operation on the personal data (that is, identity information) of the user.

In another example, the service consumer network element is a PCF, and the authorization verification network element is an NWDAF. The PCF invokes an API provided by the NWDAF for data analytics, and provides a location of the user equipment, for example, Nnwdaf_AnalyticsSubscription_Subscribe, where an inputted analytics ID is set to UE mobility analytics, and Target of Analytics Reporting is set to an SUPI of a UE. The analytics ID is the foregoing data invocation identifier, and the data invocation identifier is set to UE mobility analytics, indicating that the PCF requests the NWDAF to analyze mobility data of the user equipment.

It should be understood that the sending in step 404 and the sending in step 401 may be combined. To be specific, the capability indication information #1 in 401 indicating that stopping data processing is supported may be carried in the data invocation request message in 404, that is, while sending the data invocation request message, the service consumer network element may report the capability indication information #1 indicating that stopping data processing is supported.

405: The authorization verification network element determines whether a user intention needs to be verified.

For example, after receiving the data invocation request message from the service consumer network element, the authorization verification network element determines, according to a local policy, whether the user intention needs to be verified (in other words, whether a user consent result needs to be verified) for current data invocation, that is, determines whether it is necessary to verify whether the user allows the service consumer network element to use the user data.

For example, the authorization verification network element determines, according to the local policy, whether there is an operation performed on the personal data of the user in the current invocation. If there is the operation performed on the personal data of the user in the current invocation, the authorization verification network element determines that the user intention needs to be verified for the current invocation. If there is no operation performed on the personal data of the user in the current invocation, the authorization verification network element determines that the user intention does not need to be verified for the current invocation.

If the user intention needs to be verified for the current data invocation, the authorization verification network element verifies the user intention for the current data invocation, the authorization verification network element determines whether the user consents to perform a corresponding operation on the user data, or the authorization verification network element verifies whether the user allows the service consumer network element to use the user data. The following describes two possible implementations using examples.

In a possible implementation (denoted as a solution 1), the authorization verification network element obtains user subscription information from a storage network element, and then determines the user intention based on the user subscription information. For example:

406: The authorization verification network element sends a subscription information request message to the storage network element.

For example, the subscription information request message includes an identifier #2 of the user equipment, and the subscription information request message is used to request to obtain the subscription information of the user equipment. It should be understood that the identifier #2 of the user equipment may be an identifier that is the same as the identifier #1 of the user equipment, or may be an identifier obtained through conversion of the identifier #1 of the user equipment. This is not limited in this application. For example, the identifier #1 of the user equipment is the GPSI of the user equipment, the identifier #2 of the user equipment is the SUPI, and the SUPI is obtained through conversion of the GPSI.

407: The storage network element obtains the user subscription information.

For example, the storage network element receives the subscription information request message from the authorization verification network element, and then obtains the subscription information of the user equipment based on the identifier #2 that is of the user equipment and that is carried in the subscription information request message, in other words, obtains subscription information corresponding to the identifier #2 of the user equipment. The subscription information includes a data operation indication and a user intention indication corresponding to the data operation indication.

The data operation indication indicates an operation performed on data. A specific form of the data operation indication may be an API name, and optionally, an API input may be further included. The user intention indication may also be referred to as the user consent result, and indicates whether the user consents to the operation that is indicated by the data operation indication and that is performed on the data. For example, if the user intention indication is 1, it indicates that the user consents to the operation that is indicated by the data operation indication and that is performed on the data. For another example, if the user intention indication is 0, it indicates that the user does not consent to the operation that is indicated by the data operation indication and that is performed on the data.

Optionally, the subscription information may further include an identifier of a data processor. The identifier of the data processor may be a PLMN ID, an AS ID, or the like. If the subscription information includes the identifier of the data processor, the user intention indication indicates whether to allow the data processor to perform an operation corresponding to the data operation indication on the data.

408: The storage network element sends a subscription information response message to the authorization verification network element.

For example, the subscription information response message includes the subscription information of the user equipment, where the subscription information includes the data operation indication and the user intention indication corresponding to the data operation indication, and optionally further includes the identifier of the data processor.

Correspondingly, the authorization verification network element receives the subscription information response message from the storage network element, and determines, based on the subscription information carried in the subscription information response message, whether the user equipment consents to perform the operation indicated by the data invocation identifier.

For example, the authorization verification network element obtains the subscription information of the user equipment from the subscription information response message, and determines, based on the subscription information, a user intention corresponding to the operation indicated by the data invocation identifier. For example, the authorization verification network element finds the operation corresponding to the data invocation identifier from the operation corresponding to the data operation indication, and then obtains a user intention indication corresponding to the operation. Optionally, if the subscription information further includes the identifier of the data processor, the authorization verification network element may further obtain the identifier of the corresponding data processor based on the operation corresponding to the data invocation identifier, and verify whether the identifier of the data processor includes the identifier of the service consumer network element.

In another possible implementation (denoted as a solution 2), the authorization verification network element requests a storage network element to determine the user intention. For example:

409: The authorization verification network element sends a user intention verification request message to the storage network element.

For example, the user intention verification request message includes an identifier #2 of the user equipment and the data invocation identifier. Optionally, the user intention verification request message further includes an identifier of a data processor. The user intention verification request message is used to request to verify a user intention corresponding to the operation indicated by the data invocation identifier. In other words, the user intention verification request message is used to request to verify whether the user consents to perform the operation indicated by the data invocation identifier.

It should be understood that the identifier #2 of the user equipment may be an identifier that is the same as the identifier #1 of the user equipment, or may be an identifier obtained through conversion of the identifier #1 of the user equipment. This is not limited in this application. For example, the identifier #1 of the user equipment is the GPSI of the user equipment, the identifier #2 of the user equipment is the SUPI, and the SUPI is obtained through conversion of the GPSI. It should be understood that the data invocation identifier is an identifier that is carried in the data invocation request message and that indicates a specific operation requested by the service consumer network element to be performed on the data.

410: The storage network element determines the user intention based on the user subscription information.

For example, the storage network element receives the user intention verification request message from the authorization verification network element, and obtains the subscription information of the user equipment based on the identifier #2 that is of the user equipment and that is carried in the user intention verification request message.

Further, the storage network element determines, based on the subscription information of the user equipment, the user intention corresponding to the operation indicated by the data invocation identifier. In other words, the storage network element determines, based on the subscription information of the user equipment, whether the user equipment consents to perform the operation indicated by the data invocation identifier. For example, the storage network element finds the operation corresponding to the data invocation identifier from the operation corresponding to the data operation indication, and then determines the user intention corresponding to the operation. Optionally, if the subscription information further includes the identifier of the data processor, the storage network element may further obtain the identifier of the corresponding data processor based on the operation corresponding to the data invocation identifier, and verify whether the identifier of the data processor includes the identifier of the service consumer network element.

411: The storage network element sends a user intention verification response message to the authorization verification network element.

For example, the user intention verification response message includes user intention indication information, where the user intention indication information indicates whether the user equipment consents to perform the operation corresponding to the data invocation identifier on the user data.

Correspondingly, the authorization verification network element receives the user intention verification request message from the storage network element, and determines, based on a user intention indication carried in the user intention verification request message, the user intention corresponding to the data invocation indication.

If the user intention indicates that the user does not consent to perform a corresponding operation on the user data, in 413, the authorization verification network element sends a data invocation response message to the service consumer network element, where the data invocation response message is used to reject the data invocation request message of the service consumer network element.

412: The authorization verification network element determines whether the service consumer network element supports stopping data processing.

For example, if the user intention indicates that the user consents to perform a corresponding operation on the user data, the authorization verification network element further determines whether the service consumer network element supports stopping data processing, in other words, whether the service consumer network element has the capability of supporting stopping data processing.

For example, the authorization verification network element determines, based on the local context, whether the service consumer network element has the capability of supporting stopping data processing. Details are as follows:

The authorization verification network element searches, in the local context based on the identifier of the service consumer network element, for the capability indication information #1 that indicates that stopping data processing is supported and that corresponds to the identifier of the service consumer network element. If there is the indication information #1 in the context, the authorization verification network element determines that the service consumer network element has the capability of supporting stopping data processing. If there is no indication information #1 in the context, the authorization verification network element determines that the service consumer network element does not have the capability of supporting stopping data processing. In other words, the service consumer network element does not support stopping data processing.

It should be understood that the authorization verification network element may first determine the user intention, and then determine whether the service consumer network element has the capability of stopping data processing, or may first determine whether the service consumer network element has the capability of stopping data processing, and then determine the user intention. This is not limited in this application.

That is, step 412 may alternatively be performed before the solution 1 or the solution 2. In this implementation, if the authorization verification network element determines, based on a determining result of 405, that the user intention needs to be verified for the current data invocation, the authorization verification network element first determines whether the service consumer network element has the capability of supporting stopping data processing. For a specific determining manner, refer to step 412. Details are not described again. In this case, if the service consumer network element does not have the capability of supporting stopping data processing, the authorization verification network element may skip step 406 to step 408 or step 409 to step 411, and directly perform step 413, that is, the data invocation response message is sent to the service consumer network element, to reject the data invocation request message of the service consumer network element.

In a possible implementation, if the service consumer network element does not have the capability of supporting stopping data processing, the service consumer network element may report, before or at the same time as step 404, capability indication information indicating that stopping data processing is not supported. Correspondingly, after receiving the capability indication information that indicates that stopping data processing is not supported and that is reported by the service consumer network element, the authorization verification network element stores, in the context, the capability indication information indicating that stopping data processing is not supported, and associates the capability indication information with the identifier of the service consumer network element. In this case, that the authorization verification network element determines, based on the local context, whether the service consumer network element has the capability of supporting stopping data processing may further include: If the local context stores the capability indication information that indicates that stopping data processing is not supported and that is associated with the identifier of the service consumer network element, the authorization verification network element determines that the service consumer network element does not have the capability of supporting stopping data processing. In other words, the service consumer network element does not support stopping data processing. In this case, the authorization verification network element sends the data invocation response message to the service consumer network element, to reject the data invocation request message of the service consumer network element.

If the authorization verification network element determines that the user consents to perform the operation corresponding to the data invocation identifier on the user data, and the service consumer network element supports stopping data processing, the authorization verification network element requests, based on the data invocation request message, to obtain the user data from a service provider network element. For example:

414: The authorization verification network element sends a user data request message to the service provider network element.

For example, the user data request message is used to request the user data needed by the data invocation request.

It should be understood that the service provider network element herein may be a party that provides a service among two parties that communicate based on a service-based interface. The service provider network element may also be referred to as a data providing network element, a data provider, a service provider, a producer, or the like. The service provider network element may be, for example, a network element that provides data, for example, an AMF or an SMF.

415: The service provider network element sends user data #1 to the authorization verification network element.

For example, the service provider network element receives the user data request message from the authorization verification network element, and then sends the user data #1 to the authorization verification network element based on the request message.

416: The authorization verification network element sends user data #2 to the service consumer network element.

For example, the authorization verification network element receives the user data #1 from the service provider network element, and then processes the user data #1 based on the operation corresponding to the data invocation identifier, to obtain the user data #2.

For example, the service consumer network element is an application server AS, and the authorization verification network element is a NEF. The AS invokes an API (for example, Nnef_UEIdentifier_Get, where inputted user information is set to an IP address of a user equipment) that is exposed by the NEF and that is used to request an identifier of the user equipment. In this example, both the user data #1 and the user data #2 may be identification information of a user corresponding to the requested IP address.

For another example, the service consumer network element is a PCF, and the authorization verification network element is an NWDAF. The PCF invokes an API provided by the NWDAF for data analytics, and provides an analyzed UE location (for example, Nnwdaf_AnalyticsSubscription_Subscribe, where an inputted analytics ID is set to UE mobility analytics, and Target of Analytics Reporting is set to an SUPI of a user equipment). In this example, the user data #1 is location information of the UE, and the user data #2 is an analytics result obtained based on the location information of the UE.

417: A UDM updates the user subscription information.

For example, if the user wants to change a processing intention on the user data from consenting to not consenting, the user wants to cancel the consent to processing of the user data, or the user consent is no longer granted to the service consumer network element for use of the user data, the user subscription information changes. For example, if the user equipment no longer consents to analytics performed on mobility of the user equipment, the analytics identifier in the subscription information is that a user intention corresponding to a data operation corresponding to the user equipment mobility analytics (UE mobility analytics) changes to "not consenting". Correspondingly, the UDM updates the user subscription information.

418: The storage network element sends a subscription information change notification message to the authorization verification network element.

For example, the storage network element sends the subscription information change notification message to the authorization verification network element, where the subscription information change notification message carries changed subscription information.

419: The authorization verification network element sends a data invocation notification message to the service consumer network element.

For example, if the authorization verification network element receives the subscription information change notification message sent by the storage network element, and determines, based on the subscription information carried in the subscription information change notification message, that the user equipment no longer consents to the operation corresponding to the data invocation identifier, the authorization verification network element sends the data invocation notification (Nnwdaf_AnalyticsSubscription_Notify) message to the service consumer network element, where the data invocation notification message includes a termination indication (Termination Request), and the termination indication indicates the service consumer network element to terminate user data processing. In other words, the termination indication indicates the service consumer network element to terminate user data invocation.

420: The service consumer network element stops processing the personal data.

For example, if the service consumer network element receives the data invocation notification message from the authorization verification network element, and determines, based on the data invocation notification message, that the user no longer consents to perform the operation corresponding to the operation indication on the user data, the service consumer network element stops processing the user data. In other words, the service consumer network element stops performing the operation corresponding to the operation indication on the user data. Specifically, for example, the service consumer network element revokes subscription to the data invocation, and deletes the personal data. The service consumer network element may then send a data invocation cancellation message to the authorization verification network element, to revoke the previous subscription to the data invocation. The data invocation cancellation message may include Nnwdaf_ AnalyticsSubscription_Unsubscribe and the like. The service consumer network element deletes the previously obtained user data #2.

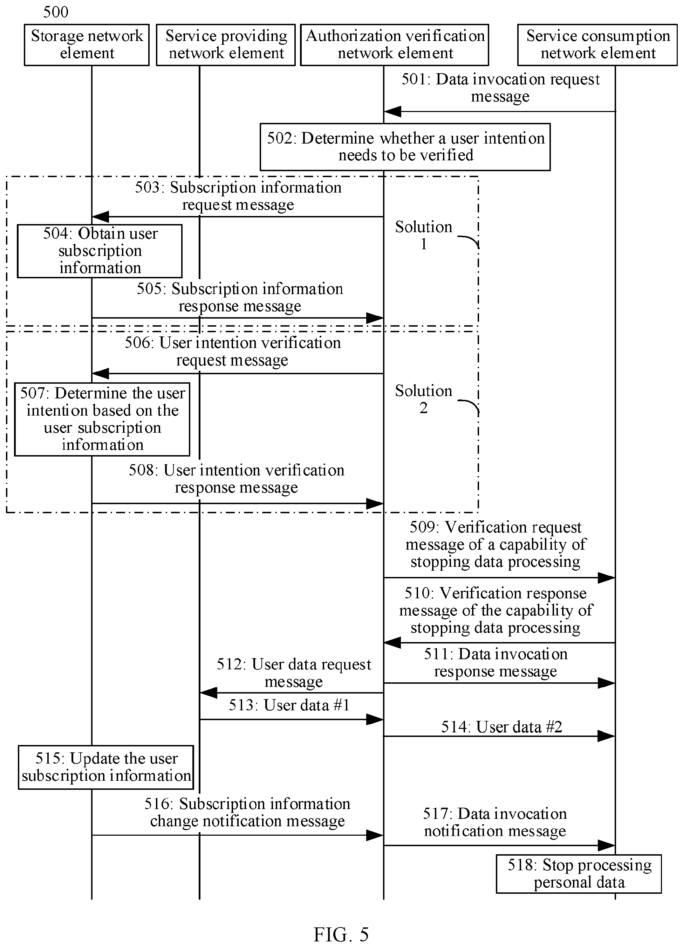

FIG. 5 is a flowchart of an example of a data invocation method 500. The method 500 includes the following steps.

501: A service consumer network element sends a data invocation request message to an authorization verification network element.

502: The authorization verification network element determines whether a user intention needs to be verified.

It should be understood that step 501 and step 502 are similar to step 404 and step 405 in the method 400. Details are not described again.

If the authorization verification network element determines that the user intention does not need to be verified for current data invocation, the authorization verification network element skips step 503 to step 510. 511: The authorization verification network element sends a data invocation response message to the service consumer network element, where the data invocation response message is used to reject a data invocation request of the service consumer network element.

If the authorization verification network element determines that the user intention needs to be verified for current data invocation, the authorization verification network element verifies the user intention through a storage network element. A specific verification method is similar to the verification solution provided in the method 400, that is, step 503 to step 508 are similar to step 407 to step 412 in the method 400. Details are not described herein again.

If a user consents to perform an operation requested by the service consumer network element on personal data, the authorization verification network element verifies whether the service consumer network element supports stopping data processing. In other words, the authorization verification network element verifies whether the service consumer network element has a capability of stopping data processing. For example:

509: The authorization verification network element sends, to the service consumer network element, a verification request message of the capability of stopping data processing.

For example, the verification request message of the capability of stopping data processing is used to request to obtain the capability that is of stopping data processing and that is of the service consumer network element. In other words, the verification request message of the capability of stopping data processing is used to query whether the service consumer network element has the capability of supporting stopping data processing.

510: The service consumer network element sends, to the authorization verification network element, a verification response message of the capability of stopping data processing.

For example, in response to the verification request message that is of the capability of stopping data processing and that is from the authorization verification network element, the service consumer network element sends, to the authorization verification network element, the verification response message of the capability of stopping data processing, where the verification response message of the capability of stopping data processing includes capability indication information, and the capability indication information indicates whether the service consumer network element supports stopping data processing.

Correspondingly, the authorization verification network element receives the verification response message that is of the capability of stopping data processing and that is from the service consumer network element, and determines, based on the capability indication information carried in the response message, whether the service consumer network element supports stopping data processing.

In another possible implementation, if the service consumer network element supports stopping data processing, after receiving the verification request message that is of the capability of stopping data processing and that is from the authorization verification network element, the service consumer network element sends, to the authorization verification network element by using the verification response message of the capability of stopping data processing, the capability indication information indicating that stopping data processing is supported, where the capability indication information indicating that stopping data processing is supported indicates that the service consumer network element supports stopping data processing. If the service consumer network element does not support stopping data processing, after receiving the verification request message that is of the capability of stopping data processing and that is from the authorization verification network element, the service consumer network element may not reply to the verification request message of the capability of stopping data processing. After sending, to the service consumer network element, the verification request message of the capability of stopping data processing, the authorization verification network element may set a timer. If the authorization verification network element still does not receive, when timing of the timer ends, the verification response message that is of the capability of stopping data processing and that is sent by the service consumer network element, the authorization verification network element determines that the service consumer network element does not support stopping data processing.

It should be understood that the authorization verification network element may first determine the user intention, and then determine whether the service consumer network element has the capability of stopping data processing, or may first determine whether the service consumer network element has the capability of data processing, and then determine the user intention. This is not limited in this application.

If the authorization verification network element determines that the service consumer network element does not have the capability of supporting stopping data processing, in 511, the authorization verification network element sends the data invocation response message to the service consumer network element, where the data invocation response message is used to reject the data invocation request message of the service consumer network element.

If the authorization verification network element determines that the service consumer network element has the capability of supporting stopping data processing, and the user consents to perform an operation corresponding to a data invocation identifier on user data, the authorization verification network element obtains user data #1 through a service provider network element, and sends processed user data #2 to the service consumer network element. A specific process is shown in step 512 to step 514. It should be understood that step 512 to step 514 are similar to step 414 to step 416 in the method 400. For brevity, details are not described again.

If the user changes the user intention, the storage network element needs to notify the authorization verification network element, and then the authorization verification network element indicates the service consumer network element to stop processing the personal data. A specific process is shown in step 515 to step 518. It should be understood that step 515 to step 518 are similar to step 417 to step 420 in the method 400. For brevity, details are not described again.

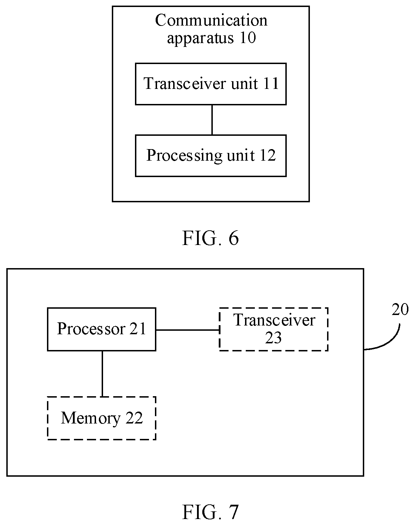

The methods provided in embodiments of this application are described above in detail with reference to FIG. 3 to FIG. 5. The apparatuses provided in embodiments of this application are described below in detail with reference to FIG. 6 and FIG. 7. It should be understood that descriptions of apparatus embodiments correspond to the descriptions of the method embodiments. Therefore, for content that is not described in detail, refer to the foregoing method embodiments. For brevity, details are not described herein again.

FIG. 6 is a schematic block diagram of an authorization verification apparatus according to an embodiment of this application. The apparatus 10 includes a transceiver unit 11 and a processing unit 12. The transceiver unit 11 may implement a corresponding communication function, and the processing unit 12 is configured to perform data processing. The transceiver unit 11 may also be referred to as a communication interface or a communication unit.

Optionally, the apparatus 10 may further include a storage unit. The storage unit may be configured to store instructions and/or data. The processing unit 12 may read the instructions and/or the data in the storage unit, to enable the communication apparatus to implement the foregoing method embodiments.

The apparatus 10 may be configured to perform an action performed by the authorization verification network element in the foregoing method embodiments. In this case, the apparatus 10 may be the authorization verification network element or a component that can be configured in the authorization verification network element. The transceiver unit 11 is configured to perform a transceiver-related operation on an authorization verification network element side in the foregoing method embodiments. The processing unit 12 is configured to perform a processing-related operation of the authorization verification network element in the foregoing method embodiments.

In a design, the apparatus 10 is configured to perform an action performed by the authorization verification network element in the embodiment shown in FIG. 3.

In an implementation, the transceiver unit is configured to receive a data invocation request message from a service consumer network element, where the data invocation request message includes an identifier of a data owner, and the data invocation request message is used to request to invoke data of the data owner. The processing unit is configured to determine whether the service consumer network element has a capability of supporting stopping data processing, where the capability of supporting stopping data processing indicates that the service consumer network element supports stopping processing data obtained from the authorization verification network element. The processing unit is further configured to: when the service consumer network element does not have the capability, reject the data invocation request message.

In an example, the transceiver unit is specifically configured to receive capability indication information from the service consumer network element.

In response to the data invocation request message, the processing unit is specifically configured to determine, based on the capability indication information, whether the service consumer network element has the capability of supporting stopping data processing.

In an example, when the transceiver unit receives no capability indication information from the service consumer network element, or when a context of the apparatus stores no capability indication information of the service consumer network element, the processing unit is specifically configured to determine that the service consumer network element does not have the capability of supporting stopping data processing, where the capability indication information indicates whether the service consumer network element has the capability.

In an example, the transceiver unit is further configured to send a capability information query request message to the service consumer network element, where the capability information query request message is used to request to query whether the service consumer network element has the capability.

In an example, the transceiver unit is specifically configured to send a data invocation response message to the service consumer network element, where the data invocation response message is used to reject the data invocation request message, the data invocation response message includes a cause value, and the cause value indicates that a rejection cause is that the service consumer network element does not support the capability.

In an example, the authorization verification network element determines that the data owner allows the service consumer network element to use the data of the data owner.

In an example, the transceiver unit is specifically configured to send an intention verification request message to a storage network element, where the intention verification request message includes the identifier of the data owner, and the intention verification request message is used to request to verify whether the data owner allows the service consumer network element to use the data of the data owner. The transceiver unit is further specifically configured to receive an intention verification response message from the storage network element. The processing unit is specifically configured to determine, based on the intention verification request message, that the data owner allows the service consumer network element to use the data of the data owner.

Alternatively, the apparatus 10 may be configured to perform an action performed by the service consumer network element in the foregoing method embodiments. In this case, the apparatus 10 may be the service consumer network element or a component that can be configured in the service consumer network element. The transceiver unit 11 is configured to perform a transceiver-related operation on a service consumer network element side in the foregoing method embodiments. The processing unit 12 is configured to perform a processing-related operation on the service consumer network element side in the foregoing method embodiments.

In an implementation, the transceiver unit is configured to send a data invocation request message to an authorization verification network element, where the data invocation request message includes an identifier of a data owner, and the data invocation request message is used to request to invoke data of the data owner. The transceiver unit is further configured to receive a capability information query request message from the authorization verification network element, where the capability information query request message is used to request to query whether the service consumer network element has a capability of supporting stopping data processing. In response to the capability information query request message, the transceiver unit is further configured to send capability indication information to the authorization verification network element, where the capability indication information indicates whether the service consumer network element has the capability.

In an example, the transceiver unit is further configured to receive a data invocation response message from the authorization verification network element, where the data invocation response message is used to reject the data invocation request message, the data invocation response message includes a cause value, and the cause value indicates that a rejection cause is that the service consumer network element does not have the capability. The apparatus further includes the processing unit, configured to determine, based on the cause value, not to request to obtain the data from the authorization verification network element.

The apparatus 10 may implement corresponding steps or procedures performed by the authorization verification network element in the method 400 and the method 500 according to embodiments of this application. The apparatus 10 may include units configured to perform the methods performed by the authorization verification network element in the method 400 in FIG. 4 and the method 500 in FIG. 5. In addition, the units in the apparatus 10 and the foregoing other operations and/or functions are respectively used to implement the corresponding procedures of the method 400 and the method 500.

When the apparatus 10 is configured to perform the method 400 in FIG. 4, the transceiver unit 11 may be configured to perform any one of steps 401, 403, 404, 406, 408, 409, 411, 413, 414, 415, 416, 418 and 419 in the method 400, and the processing unit 12 is configured to indicate any one of steps 402, 405, and 412 in the method 400.

When the apparatus 10 is configured to perform the method 500 in FIG. 5, the transceiver unit 11 may be configured to perform any one of steps 501, 503, 505, 506, 508, 509 to 514, 516, and 517 in the method 500, and the processing unit 12 may be configured to perform step 502 in the method 500.

It should be understood that specific processes in which the units perform the foregoing corresponding steps are described in detail in the foregoing method embodiments. For brevity, details are not described herein again.

The apparatus 10 may implement corresponding steps or procedures performed by the service consumer network element in the method 400 and the method 500 according to embodiments of this application. The apparatus 10 may include units configured to perform the methods performed by the service consumer network element in the method 400 in FIG. 4 and the method 500 in FIG. 5. In addition, the units in the apparatus 10 and the foregoing other operations and/or functions are respectively used to implement the corresponding procedures of the method 400 and the method 500.

When the apparatus 10 is configured to perform the method 400 in FIG. 4, the transceiver unit 11 may be configured to perform any one of steps 401, 403, 404, 413, 416, and 419 in the method 400, and the processing unit 12 is configured to perform 420 in the method 400.

When the apparatus 10 is configured to perform the method 500 in FIG. 5, the transceiver unit 11 may be configured to perform any one of steps 501, 509 to 511, 514, and 517 in the method 500, and the processing unit 12 may be configured to perform step 518 in the method 500.

It should be understood that specific processes in which the units perform the foregoing corresponding steps are described in detail in the foregoing method embodiments. For brevity, details are not described herein again.

As shown in FIG. 7, an embodiment of this application further provides an authentication authorization device 20. The device 20 includes a processor 21. The processor 21 is coupled to a memory 22. The memory 22 is configured to store a computer program or instructions and/or data. The processor 21 is configured to execute the computer program or the instructions and/or the data stored in the memory 22, so that the methods in the foregoing method embodiments are performed.

Optionally, the device 20 includes one or more processors 21.

Optionally, as shown in FIG. 7, the device 20 may further include the memory 22.

Optionally, the device 20 may include one or more memories 22.

Optionally, the memory 22 and the processor 21 may be integrated together, or separately disposed.

Optionally, as shown in FIG. 7, the device 20 may further include a transceiver 23, and the transceiver 23 is configured to receive and/or send a signal. For example, the processor 21 is configured to control the transceiver 23 to receive and/or send the signal.

In a solution, the device 20 is configured to implement an operation performed by the authorization verification network element in the foregoing method embodiments.

For example, the processor 21 is configured to implement a processing-related operation performed by the authorization verification network element in the foregoing method embodiments. The transceiver 23 is configured to implement a transceiver-related operation performed by the authorization verification network element in the foregoing method embodiments.

In another solution, the device 20 is configured to implement an operation performed by the service consumer network element in the foregoing method embodiments.

For example, the processor 21 is configured to implement a processing-related operation performed by the service consumer network element in the foregoing method embodiments. The transceiver 23 is configured to implement a transceiver-related operation performed by the service consumer network element in the foregoing method embodiments.

It should be understood that specific processes in which the modules perform the foregoing corresponding steps are described in detail in the foregoing method embodiments. For brevity, details are not described herein again.

An embodiment of this application further provides a processing apparatus, including a processor and an interface. The processor is configured to perform the method in any one of the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

An embodiment of this application further provides a computer-readable storage medium. The computer-readable storage medium stores computer instructions used to implement the method performed by a first network element (NF service provider), a second network element (NF service consumer), or a third network element (NRF) in the foregoing method embodiments.

For example, when the computer program is executed by a computer, the computer is enabled to implement the method performed by the first network element (NF service provider), the second network element (NF service consumer), or the third network element (NRF) in the foregoing method embodiments.

An embodiment of this application further provides a computer program product including instructions. When the instructions are executed by a computer, the computer is enabled to implement the method performed by a first network element (or an NF service provider), the method performed by a second network element (or an NF service consumer), or the method performed by a third network element (or an NRF) in the foregoing method embodiments.

An embodiment of this application further provides a communication system. The communication system includes the first network element, the second network element, and the third network element in the foregoing embodiments.

It may be clearly understood by a person skilled in the art that, for the purpose of convenient and brief description, for explanations of related content and beneficial effects in any of the foregoing provided communication apparatuses, refer to corresponding method embodiments provided above. Details are not described herein again.

A specific structure of an execution body of the method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be a terminal device, a network device, or a functional module that can invoke and execute a program and that is in the terminal device or the network device.

Aspects or features of this application may be implemented as a method, an apparatus, or a product that uses standard programming and/or engineering technologies. The term "product" used in this specification may cover a computer program that can be accessed from any computer-readable component, carrier, or medium.

The computer-readable storage medium may be any usable medium accessible by a computer, or a data storage device, for example, a server or a data center, integrating one or more usable media. The usable medium (or the computer-readable medium) may include, for example, but is not limited to: various media that can store program code such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, a flash memory device (for example, an erasable programmable read-only memory (erasable programmable read-only memory, EPROM), a card, a stick, or a key drive), or a semiconductor medium (for example, a solid-state disk (solid-state disk, SSD), a USB flash drive, a read-only memory (read-only memory, ROM), or a random access memory (random access memory, RAM)).

Various storage media described in this specification may indicate one or more devices and/or other machine-readable media that are configured to store information. The term "machine-readable medium" may include but is not limited to: a radio channel and various other media that can store, include, and/or carry instructions and/or data.

It should be understood that the memory mentioned in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example rather than limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification is intended to include but not limited to these memories and any memory of another proper type.

In several embodiments provided in this application, it should be understood that the disclosed apparatuses and methods may be implemented in other manners. For example, the foregoing described apparatus embodiments are merely examples. For example, division into the foregoing units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The foregoing units described as separate parts may or may not be physically separate, and parts displayed as units may or may not be physical units, that is, may be located in one location, or may be distributed on a plurality of network units. Some or all of the units may be selected based on an actual requirement to implement the solutions provided in this application.

In addition, functional units in embodiments of this application may be integrated into one unit, each of the units may exist alone physically, or two or more units may be integrated into one unit.

All or some of the foregoing embodiments may be implemented by software, hardware, firmware, or any combination thereof.

When software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Therefore, the protection scope of this application shall be subject to the protection scope of the claims.

## Claims

1. A data invocation method, comprising:
receiving (301), by an authorization verification network element, a data invocation request message from a service consumer network element, wherein the data invocation request message comprises an identifier of a data owner, and the data invocation request message is used to request to invoke data of the data owner;
determining (302), by the authorization verification network element, whether the service consumer network element has a capability of supporting stopping data processing, wherein the capability indicates that the service consumer network element supports stopping processing data obtained from the authorization verification network element; and
in response to that the service consumer network element does not have the capability, rejecting, by the authorization verification network element, the data invocation request message.

2. The method according to claim 1, wherein the determining, by the authorization verification network element, whether the service consumer network element has the capability of supporting stopping data processing comprises:
in response to that the authorization verification network element receives no capability indication information from the service consumer network element, determining, by the authorization verification network element, that the service consumer network element does not have the capability of supporting stopping data processing, wherein the capability indication information indicates that the service consumer network element has the capability.

3. The method according to claim 1 or 2, wherein the rejecting, by the authorization verification network element, the data invocation request message comprises:
sending (303), by the authorization verification network element, a data invocation response message to the service consumer network element, wherein the data invocation response message is used to reject the data invocation request message, the data invocation response message comprises a cause value, and the cause value indicates that a cause for rejecting the data invocation request message is that the service consumer network element does not have the capability.

4. The method according to any one of claims 1 to 3, wherein the method further comprises:
when the service consumer network element has the capability, determining, by the authorization verification network element, whether the data owner allows the service consumer network element to use the data of the data owner.

5. The method according to claim 4, wherein the when the service consumer network element has the capability, determining, by the authorization verification network element, whether the data owner allows the service consumer network element to use the data of the data owner comprises:
in response to that the data invocation request message comprises indication information indicating that the service consumer network element has the capability, determining, by the authorization verification network element, whether the data owner allows the service consumer network element to use the data of the data owner.

6. The method according to claim 4 or 5, wherein the method further comprises:
in response to that the data owner does not allow the service consumer network element to use the data of the data owner, sending, by the authorization verification network element, a data invocation response message to the service consumer network element, wherein the data invocation response message is used to reject the data invocation request message, the data invocation response message comprises a cause value, and the cause value indicates that a cause for rejecting the data invocation request message is that the data owner does not allow the service consumer network element to use the data of the data owner.

7. The method according to claim 3, wherein the method further comprises:
sending, by the service consumer network element, the data invocation request message to the authorization verification network element; and
receiving, by the service consumer network element, the data invocation response message from the authorization verification network element.

8. A data invocation method, comprising:
sending, by a service consumer network element, a data invocation request message to an authorization verification network element, wherein the data invocation request message comprises an identifier of a data owner, and the data invocation request message is used to request to invoke data of the data owner; and
receiving, by the service consumer network element, a data invocation response message from the authorization verification network element, wherein the data invocation response message is used to reject the data invocation request message, the data invocation response message comprises a cause value, and the cause value indicates a cause for rejecting the data invocation request message is that the service consumer network element does not have a capability of supporting stopping data processing, wherein the capability indicates that the service consumer network element supports stopping processing data obtained from the authorization verification network element.

9. A communication apparatus, wherein the apparatus is configured to:
receive a data invocation request message from a service consumer network element, wherein the data invocation request message comprises an identifier of a data owner, and the data invocation request message is used to request to invoke data of the data owner;
determine whether the service consumer network element has a capability of supporting stopping data processing, wherein the capability indicates that the service consumer network element supports stopping processing data obtained from the apparatus; and
in response to that the service consumer network element does not have the capability, reject the data invocation request message.

10. The apparatus according to claim 9, wherein the apparatus is further configured to:
in response to that no capability indication information is received from the service consumer network element, determine that the service consumer network element does not have the capability of supporting stopping data processing, wherein the capability indication information indicates that the service consumer network element has the capability.

11. The apparatus according to claim 9 or 10, wherein the apparatus is further configured to:
send a data invocation response message to the service consumer network element, wherein the data invocation response message is used to reject the data invocation request message, the data invocation response message comprises a cause value, and the cause value indicates that a cause for rejecting the data invocation request message is that the service consumer network element does not have the capability.

12. A communication apparatus, wherein the apparatus is configured to:
send a data invocation request message to an authorization verification network element, wherein the data invocation request message comprises an identifier of a data owner, and the data invocation request message is used to request to invoke data of the data owner; and
receive a data invocation response message from the authorization verification network element, wherein the data invocation response message is used to reject the data invocation request message, the data invocation response message comprises a cause value, and the cause value indicates a cause for rejecting the data invocation request message is that the apparatus does not have a capability of supporting stopping data processing, wherein the capability indicates that the apparatus supports stopping processing data obtained from the authorization verification network element .

13. A communication system, comprising a communication apparatus according to any one of claims 9 to 11 and a service consumer network element, wherein the service consumer network element is configured to:
send a data invocation request message to the communication apparatus; and
receive a data invocation response message from the communication apparatus.

14. A computer program product, comprising computer program instructions, wherein when the computer program instructions are run on a computer of an authorization verification network element, the authorization verification network element is enabled to perform the method according to any one of claims 1 to 6.

15. A computer program product, comprising computer program instructions, wherein when the computer program instructions are run on a computer of a service consumer network element, the service consumer network element is enabled to perform the method according to claim 8.

## Patentansprüche

1. Datenaufrufverfahren, das Folgendes umfasst:
Empfangen (301), durch ein Autorisierungsverifikationsnetzelement, einer Datenaufrufanforderungsnachricht von einem Dienstkonsumentennetzelement, wobei die Datenaufrufanforderungsnachricht eine Kennung eines Dateneigentümers umfasst und die Datenaufrufanforderungsnachricht verwendet wird, um einen Aufruf von Daten des Dateneigentümers anzufordern;
Bestimmen (302), durch das Autorisierungsverifikationsnetzelement, ob das Dienstkonsumentennetzelement eine Fähigkeit zur Unterstützung des Stoppens einer Datenverarbeitung aufweist, wobei die Fähigkeit angibt, dass das Dienstkonsumentennetzelement das Stoppen einer Verarbeitung von von dem Autorisierungsverifikationsnetzelement erhaltenen Daten unterstützt; und
als Reaktion darauf, dass das Dienstkonsumentennetzelement die Fähigkeit nicht aufweist, Ablehnen, durch das Autorisierungsverifikationsnetzelement, der Datenaufrufanforderungsnachricht.

2. Verfahren nach Anspruch 1, wobei das Bestimmen, durch das Autorisierungsverifikationsnetzelement, ob das Dienstkonsumentennetzelement die Fähigkeit zur Unterstützung des Stoppens einer Datenverarbeitung aufweist, Folgendes umfasst:
als Reaktion darauf, dass das Autorisierungsverifikationsnetzelement keine Fähigkeitsangabeinformationen von dem Dienstkonsumentennetzelement empfängt, Bestimmen, durch das Autorisierungsverifikationsnetzelement, dass das Dienstkonsumentennetzelement die Fähigkeit zur Unterstützung des Stoppens einer Datenverarbeitung nicht aufweist, wobei die Fähigkeitsangabeinformationen angeben, dass das Dienstkonsumentennetzelement die Fähigkeit aufweist.

3. Verfahren nach Anspruch 1 oder 2, wobei das Ablehnen, durch das Autorisierungsverifikationsnetzelement, der Datenaufrufanforderungsnachricht Folgendes umfasst:
Senden (303), durch das Autorisierungsverifikationsnetzelement, einer Datenaufrufantwortnachricht an das Dienstkonsumentennetzelement, wobei die Datenaufrufantwortnachricht verwendet wird, um die Datenaufrufanforderungsnachricht abzulehnen, die Datenaufrufantwortnachricht einen Ursachenwert umfasst und der Ursachenwert angibt, dass eine Ursache für die Ablehnung der Datenaufrufanforderungsnachricht darin besteht, dass das Dienstkonsumentennetzelement die Fähigkeit nicht aufweist.

4. Verfahren nach einem der Ansprüche 1 bis 3, wobei das Verfahren ferner Folgendes umfasst:
wenn das Dienstkonsumentennetzelement die Fähigkeit aufweist, Bestimmen, durch das Autorisierungsverifikationsnetzelement, ob der Dateneigentümer gestattet, dass das Dienstkonsumentennetzelement die Daten des Dateneigentümers verwendet.

5. Verfahren nach Anspruch 4, wobei das wenn das Dienstkonsumentennetzelement die Fähigkeit aufweist, Bestimmen, durch das Autorisierungsverifikationsnetzelement, ob der Dateneigentümer gestattet, dass das Dienstkonsumentennetzelement die Daten des Dateneigentümers verwendet Folgendes umfasst:
als Reaktion darauf, dass die Datenaufrufanforderungsnachricht Angabeinformationen umfasst, die angeben, dass das Dienstkonsumentennetzelement die Fähigkeit aufweist, Bestimmen, durch das Autorisierungsverifikationsnetzelement, ob der Dateneigentümer gestattet, dass das Dienstkonsumentennetzelement die Daten des Dateneigentümers verwendet.

6. Verfahren nach Anspruch 4 oder 5, wobei das Verfahren ferner Folgendes umfasst:
als Reaktion darauf, dass der Dateneigentümer nicht gestattet, dass das Dienstkonsumentennetzelement die Daten des Dateneigentümers verwendet, Senden, durch das Autorisierungsverifikationsnetzelement, einer Datenaufrufantwortnachricht an das Dienstkonsumentennetzelement, wobei die Datenaufrufantwortnachricht verwendet wird, um die Datenaufrufanforderungsnachricht abzulehnen, die Datenaufrufantwortnachricht einen Ursachenwert umfasst und der Ursachenwert angibt, dass eine Ursache für die Ablehnung der Datenaufrufanforderungsnachricht darin besteht, dass der Dateneigentümer nicht gestattet, dass das Dienstkonsumentennetzelement die Daten des Dateneigentümers verwendet.

7. Verfahren nach Anspruch 3, wobei das Verfahren ferner Folgendes umfasst:
Senden, durch das Dienstkonsumentennetzelement, der Datenaufrufanforderungsnachricht an das Autorisierungsverifikationsnetzelement, und
Empfangen, durch das Dienstkonsumentennetzelement, der Datenaufrufantwortnachricht von dem Autorisierungsverifikationsnetzelement.

8. Datenaufrufverfahren, das Folgendes umfasst:
Senden, durch ein Dienstkonsumentennetzelement, einer Datenaufrufanforderungsnachricht an ein Autorisierungsverifikationsnetzelement, wobei die Datenaufrufanforderungsnachricht eine Kennung eines Dateneigentümers umfasst und die Datenaufrufanforderungsnachricht verwendet wird, um einen Aufruf von Daten des Dateneigentümers anzufordern; und
Empfangen, durch das Dienstkonsumentennetzelement, einer Datenaufrufantwortnachricht von dem Autorisierungsverifikationsnetzelement, wobei die Datenaufrufantwortnachricht verwendet wird, um die Datenaufrufanforderungsnachricht abzulehnen, die Datenaufrufantwortnachricht einen Ursachenwert umfasst und der Ursachenwert angibt, dass eine Ursache für die Ablehnung der Datenaufrufanforderungsnachricht darin besteht, dass das Dienstkonsumentennetzelement eine Fähigkeit zur Unterstützung des Stoppens einer Datenverarbeitung nicht aufweist, wobei die Fähigkeit angibt, dass das Dienstkonsumentennetzelement das Stoppen einer Verarbeitung von von dem Autorisierungsverifikationsnetzelement erhaltenen Daten unterstützt.

9. Kommunikationseinrichtung, wobei die Einrichtung zu Folgendem ausgelegt ist:
Empfangen einer Datenaufrufanforderungsnachricht von einem Dienstkonsumentennetzelement, wobei die Datenaufrufanforderungsnachricht eine Kennung eines Dateneigentümers umfasst und die Datenaufrufanforderungsnachricht verwendet wird, um einen Aufruf von Daten des Dateneigentümers anzufordern;
Bestimmen, ob das Dienstkonsumentennetzelement eine Fähigkeit zur Unterstützung des Stoppens einer Datenverarbeitung aufweist, wobei die Fähigkeit angibt, dass das Dienstkonsumentennetzelement das Stoppen einer Verarbeitung von von der Einrichtung erhaltenen Daten unterstützt; und
als Reaktion darauf, dass das Dienstkonsumentennetzelement die Fähigkeit nicht aufweist, Ablehnen der Datenaufrufanforderungsnachricht.

10. Einrichtung nach Anspruch 9, wobei die Einrichtung ferner zu Folgendem ausgelegt ist:
als Reaktion darauf, dass keine Fähigkeitsangabeinformationen von dem Dienstkonsumentennetzelement empfangen werden, Bestimmen, dass das Dienstkonsumentennetzelement die Fähigkeit zur Unterstützung des Stoppens einer Datenverarbeitung nicht aufweist, wobei die Fähigkeitsangabeinformationen angeben, dass das Dienstkonsumentennetzelement die Fähigkeit aufweist.

11. Einrichtung nach Anspruch 9 oder 10, wobei die Einrichtung ferner zu Folgendem ausgelegt ist:
Senden einer Datenaufrufantwortnachricht an das Dienstkonsumentennetzelement, wobei die Datenaufrufantwortnachricht verwendet wird, um die Datenaufrufanforderungsnachricht abzulehnen, die Datenaufrufantwortnachricht einen Ursachenwert umfasst und der Ursachenwert angibt, dass eine Ursache für die Ablehnung der Datenaufrufanforderungsnachricht darin besteht, dass das Dienstkonsumentennetzelement die Fähigkeit nicht aufweist.

12. Kommunikationseinrichtung, wobei die Einrichtung zu Folgendem ausgelegt ist:
Senden einer Datenaufrufanforderungsnachricht an ein Autorisierungsverifikationsnetzelement, wobei die Datenaufrufanforderungsnachricht eine Kennung eines Dateneigentümers umfasst und die Datenaufrufanforderungsnachricht verwendet wird, um einen Aufruf von Daten des Dateneigentümers anzufordern; und
Empfangen einer Datenaufrufantwortnachricht von dem Autorisierungsverifikationsnetzelement, wobei die Datenaufrufantwortnachricht verwendet wird, um die Datenaufrufanforderungsnachricht abzulehnen, die Datenaufrufantwortnachricht einen Ursachenwert umfasst und der Ursachenwert angibt, dass eine Ursache für die Ablehnung der Datenaufrufanforderungsnachricht darin besteht, dass die Einrichtung eine Fähigkeit zur Unterstützung des Stoppens einer Datenverarbeitung nicht aufweist, wobei die Fähigkeit angibt, dass die Einrichtung das Stoppen einer Verarbeitung von von dem Autorisierungsverifikationsnetzelement erhaltenen Daten unterstützt.

13. Kommunikationssystem, das eine Kommunikationseinrichtung nach einem der Ansprüche 9 bis 11 und ein Dienstkonsumentennetzelement umfasst, wobei das Dienstkonsumentennetzelement zu Folgendem ausgelegt ist:
Senden einer Datenaufrufanforderungsnachricht an die Kommunikationseinrichtung; und
Empfangen einer Datenaufrufantwortnachricht von der Kommunikationseinrichtung.

14. Computerprogrammprodukt, das Computerprogrammanweisungen umfasst, wobei eine Ausführung der Computerprogrammanweisungen auf einem Computer eines Autorisierungsverifikationsnetzelements ermöglicht, dass das Autorisierungsverifikationsnetzelement des Verfahren nach einem der Ansprüche 1 bis 6 durchführt.

15. Computerprogrammprodukt, das Computerprogrammanweisungen umfasst, wobei eine Ausführung der Computerprogrammanweisungen auf einem Computer eines Dienstkonsumentennetzelements ermöglicht, dass das Dienstkonsumentennetzelement des Verfahren nach Anspruch 8 durchführt.

## Revendications

1. Procédé d'invocation de données, comprenant les étapes suivantes :
recevoir (301), par un élément de réseau de vérification d'autorisation, un message de demande d'invocation de données provenant d'un élément de réseau consommateur de service, le message de demande d'invocation de données comprenant un identifiant d'un propriétaire de données, et le message de demande d'invocation de données étant utilisé pour demander d'invoquer des données du propriétaire de données ;
déterminer (302), par l'élément de réseau de vérification d'autorisation, si l'élément de réseau consommateur de service possède une capacité de prise en charge de l'arrêt du traitement de données, la capacité indiquant que l'élément de réseau consommateur de service prend en charge l'arrêt du traitement de données obtenues de l'élément de réseau de vérification d'autorisation ; et
en réponse au fait que l'élément de réseau consommateur de service ne possède pas la capacité, rejeter, par l'élément de réseau de vérification d'autorisation, le message de demande d'invocation de données.

2. Procédé selon la revendication 1, dans lequel la détermination, par l'élément de réseau de vérification d'autorisation, si l'élément de réseau consommateur de service possède la capacité de prise en charge de l'arrêt du traitement de données comprend l'étape suivante :
en réponse au fait que l'élément de réseau de vérification d'autorisation ne reçoit aucune information d'indication de capacité provenant de l'élément de réseau consommateur de service, déterminer, par l'élément de réseau de vérification d'autorisation, que l'élément de réseau consommateur de service ne possède pas la capacité de prise en charge de l'arrêt du traitement de données, les informations d'indication de capacité indiquant que l'élément de réseau consommateur de service possède la capacité.

3. Procédé selon l'une quelconque des revendications 1 ou 2, dans lequel le rejet, par l'élément de réseau de vérification d'autorisation, du message de demande d'invocation de données comprend l'étape suivante :
envoyer (303), par l'élément de réseau de vérification d'autorisation, un message de réponse d'invocation de données à l'élément de réseau consommateur de service, le message de réponse d'invocation de données étant utilisé pour rejeter le message de demande d'invocation de données, le message de réponse d'invocation de données comprenant une valeur de cause, et la valeur de cause indiquant qu'une cause de rejet du message de demande d'invocation de données est que l'élément de réseau consommateur de service ne possède pas la capacité.

4. Procédé selon l'une quelconque des revendications 1 à 3, le procédé comprenant en outre l'étape suivante :
lorsque l'élément de réseau consommateur de service possède la capacité, déterminer, par l'élément de réseau de vérification d'autorisation, si le propriétaire de données autorise l'élément de réseau consommateur de service à utiliser les données du propriétaire de données.

5. Procédé selon la revendication 4, dans lequel, l'étape consistant à déterminer, lorsque l'élément de réseau consommateur de service possède la capacité, par l'élément de réseau de vérification d'autorisation, si le propriétaire de données autorise l'élément de réseau consommateur de service à utiliser les données du propriétaire de données comprend l'étape suivante :
en réponse au fait que le message de demande d'invocation de données comprend des informations d'indication indiquant que l'élément de réseau consommateur de service possède la capacité, déterminer, par l'élément de réseau de vérification d'autorisation, si le propriétaire de données autorise l'élément de réseau consommateur de service à utiliser les données du propriétaire de données.

6. Procédé selon la revendication 4 ou la revendication 5, dans lequel le procédé comprend en outre l'étape suivante :
en réponse au fait que le propriétaire de données n'autorise pas l'élément de réseau consommateur de service à utiliser les données du propriétaire de données, envoyer, par l'élément de réseau de vérification d'autorisation, un message de réponse d'invocation de données à l'élément de réseau consommateur de service, le message de réponse d'invocation de données étant utilisé pour rejeter le message de demande d'invocation de données, le message de réponse d'invocation de données comprenant une valeur de cause, et la valeur de cause indiquant qu'une cause de rejet du message de demande d'invocation de données est que le propriétaire de données n'autorise pas l'élément de réseau consommateur de service à utiliser les données du propriétaire de données.

7. Procédé selon la revendication 3, dans lequel le procédé comprend en outre l'étape suivante :
envoyer, par l'élément de réseau consommateur de service, le message de demande d'invocation de données à l'élément de réseau de vérification d'autorisation ; et
recevoir, par l'élément de réseau consommateur de service, le message de réponse d'invocation de données provenant de l'élément de réseau de vérification d'autorisation.

8. Procédé d'invocation de données, comprenant les étapes suivantes :
envoyer, par un élément de réseau consommateur de service, un message de demande d'invocation de données à un élément de réseau de vérification d'autorisation, le message de demande d'invocation de données comprenant un identifiant d'un propriétaire de données et le message de demande d'invocation de données étant utilisé pour demander d'invoquer des données du propriétaire de données ; et
recevoir, par l'élément de réseau consommateur de service, un message de réponse d'invocation de données de l'élément de réseau de vérification d'autorisation, le message de réponse d'invocation de données étant utilisé pour rejeter le message de demande d'invocation de données, le message de réponse d'invocation de données comprenant une valeur de cause, et la valeur de cause indiquant qu'une cause de rejet du message de demande d'invocation de données est que l'élément de réseau consommateur de service ne possède pas une capacité de prise en charge de l'arrêt du traitement de données, la capacité indiquant que l'élément de réseau consommateur de service prend en charge l'arrêt du traitement de données obtenues de l'élément de réseau de vérification d'autorisation.

9. Appareil de communication, l'appareil étant configuré pour :
recevoir un message de demande d'invocation de données provenant d'un élément de réseau consommateur de service, le message de demande d'invocation de données comprenant un identifiant d'un propriétaire de données et le message de demande d'invocation de données étant utilisé pour demander d'invoquer des données du propriétaire de données ;
déterminer si l'élément de réseau consommateur de service possède une capacité de prise en charge de l'arrêt du traitement de données, la capacité indiquant que l'élément de réseau consommateur de service prend en charge l'arrêt du traitement de données obtenues de l'appareil ; et
en réponse au fait que l'élément de réseau consommateur de service ne possède pas la capacité, rejeter le message de demande d'invocation de données.

10. Appareil selon la revendication 9, dans lequel l'appareil est en outre configuré pour :
en réponse au fait qu'aucune information d'indication de capacité n'est reçue de l'élément de réseau consommateur de service, déterminer que l'élément de réseau consommateur de service ne possède pas la capacité de prise en charge de l'arrêt du traitement de données, l'information d'indication de capacité indiquant que l'élément de réseau consommateur de service possède la capacité.

11. Appareil selon la revendication 9 ou la revendication 10, dans lequel l'appareil est en outre configuré pour :
envoyer un message de réponse d'invocation de données à l'élément de réseau consommateur de service, le message de réponse d'invocation de données étant utilisé pour rejeter le message de demande d'invocation de données, le message de réponse d'invocation de données comprenant une valeur de cause, et la valeur de cause indiquant qu'une cause de rejet du message de demande d'invocation de données est que l'élément de réseau consommateur de service ne possède pas la capacité.

12. Appareil de communication, l'appareil étant configuré pour :
envoyer un message de demande d'invocation de données à un élément de réseau de vérification d'autorisation, le message comprenant un identifiant d'un propriétaire de données et étant utilisé pour demander d'invoquer des données du propriétaire de données ; et
recevoir un message de réponse d'invocation de données en provenance de l'élément de réseau de vérification d'autorisation, le message étant utilisé pour rejeter la demande d'invocation de données, le message comprenant une valeur de cause, et la valeur de cause indiquant qu'une cause de rejet est que l'appareil ne possède pas de capacité de prise en charge de l'arrêt du traitement des données, la capacité indiquant que l'appareil prend en charge l'arrêt du traitement de données obtenues de l'élément de réseau de vérification d'autorisation.

13. Système de communication, comprenant un appareil de communication selon l'une quelconque des revendications 9 à 11 et un élément de réseau consommateur de service, l'élément de réseau consommateur de service étant configuré pour :
envoyer un message de demande d'invocation de données à l'appareil de communication ; et
recevoir un message de réponse d'invocation de données en provenance de l'appareil de communication.

14. Produit programme informatique, comprenant des instructions de programme informatique, les instructions de programme informatique permettant, lorsqu'elles sont exécutées sur un ordinateur d'un élément de réseau de vérification d'autorisation, à l'élément de réseau de vérification d'autorisation de mettre en œuvre le procédé selon l'une quelconque des revendications 1 à 6.

15. Produit programme informatique, comprenant des instructions de programme informatique, les instructions de programme informatique permettant, lorsqu'elles sont exécutées sur un ordinateur d'un élément de réseau consommateur de service, à l'élément de réseau consommateur de service de mettre en œuvre le procédé selon la revendication 8.
